# EUROPÄISCHE PATENTSCHRIFT

(11) **EP 2 689 087 B1**
(45) Veröffentlichungstag und Bekanntmachung des Hinweises auf die Patenterteilung: **27.07.2016**
(21) Anmeldenummer: 12708084.4
(22) Anmeldetag: 07.03.2012
(51) Int. Cl.: E06B 3/663

(54) **DISTANZHALTER**
SPACING ELEMENT
MOYEN D'ÉCARTEMENT

(30) Priorität: 24.03.2011 CH 536112011
(43) Veröffentlichungstag der Anmeldung: 29.01.2014
(73) Patentinhaber: Helbling Technik AG, 8048 Zürich (CH)
(72) Erfinder: STAUFERT, Gerhard, CH-4800 Zofingen (CH); TISCHHAUSER, Hans, CH-9524 Zuzwil (CH)
(74) Vertreter: Frei Patent Attorneys
(86) Internationale Anmeldenummer: PCT/CH2012/000053
(87) Internationale Veröffentlichungsnummer: WO 2012/126127

(56) Entgegenhaltungen:
- EP-A2- 1 795 688
- WO-A1-91/02878
- GB-A- 2 461 773

## Beschreibung

Die Erfindung betrifft Elemente mit Distanzhaltern und Rand-Distanzhaltem zur thermischen Isolation mit Vakuumspalt.

Elemente zur thermischen Isolation können bekanntermassen prinzipiell so aufgebaut sein, dass zwischen zwei gasdichten, in der Regel, aber nicht zwingend quasi-parallelen, ebenen oder beliebig geformten Grenzplatten ein Vakuumspalt vorhanden ist. Derartige Elemente werden in der vorliegenden Schrift als Vakuumspalt-Isolations-Elemente bezeichnet.

Die Schrift WO 91/02878 zeigt ein thermisch isolierendes Glaspaneel mit zwei voneinander beabstandeten Glasplatten, die einen Unterdruckbereich einschliessen zbd durch einen Randverbund sowie ein Raster von Kissen mit einer Beschichtung aus Glaslot miteinander verbunden sind.

Um eine genügende Isolationswirkung zu erzielen, sollte der in dem genannten Vakuumspalt herrschende Restdruck 10⁻³ mbar, besser aber 10⁻⁴ mbar nicht überschreiten. Da in der Regel verlangt ist, dass dieser Unterdruck über viele Jahre aufrechterhalten bleibt, kommen nur gasdichte und nicht ausgasende Materialien, wie beispielsweise Metalle oder Glas, als das Vakuum begrenzende Materialien in Frage.

Wenn die Grenzplatten nicht speziell geformt sind, ist es in der Regel notwendig, den Abstand zwischen den Grenzplatten mittels Distanzhaltern aufrecht zu erhalten, damit sie nicht vom Luftdruck zusammen gepresst werden. Je nach Abstand zwischen den Distanzhaltern erzeugt der Luftdruck von ca. 0.1 N/mm²hohe Druckkräfte auf dieselben. Bei einem Distanzhalterabstand von beispielsweise 100 mm ergeben sich 1000 N Druck auf jeden Distanzhalter, bei 150 mm Abstand beträgt die Druckkraft pro Distanzhalter bereits 2250 N.

Um ein Vakuumspalt-Isolations-Element mit gutem Wärmeisolationswert zu haben, muss die Wärmeleitung durch die Summe der angesprochenen Distanzhalter kleiner als 0.1 Watt/m²K, besser kleiner als 0.05 Watt/m²K und bevorzugt kleiner als 0.02 Watt/m²K sein.

Dies bedeutet, dass Distanzhalter mit einer relativ niedrigen Wärmeleitfähigkeit von beispielsweise 2.5 W/mK bei mindestens 5 mm Höhe einen Durchmesser von nur 2 mm aufweisen dürften und damit eine Druckfestigkeit von deutlich mehr als 500 N/mm² besitzen müssten.

Zusätzlich ist zu berücksichtigen, dass Unterdrücke von weniger als 10⁻³ mbar in einem geschlossenen nicht dauernd oder immer wieder abgepumpten Containment nur dann dauerhaft aufrecht erhalten bleiben, wenn während des - einmaligen - Abpumpens dafür gesorgt ist, dass die an den inneren Oberflächen des Containments adsorbierten Gase und Wassermoleküle desorbieren und mit abgepumpt werden. Dies kann man beispielsweise dadurch bewirken, dassbeim Abpumpen während eines kurzen Zeitraums, d.h. während höchstens einer Stunde, hohe Temperaturen von mindestens 300°C, besser aber von mehr als 500°C herrschen.

In Summe schränken die oben genannten Anforderungen die Auswahl der für Distanzhalter in Frage kommenden Materialien extrem ein. Als eines der wenigen bekannten derartigen Materialien kommt beispielsweise Zirkonoxid ZrO₂ in Frage. Aufwändige Versuche mit derartigen Distanzhaltern haben ergeben, dass diese zwar die gewünschte niedrige Wärmeleitfähigkeit aufweisen und die herrschenden Drücke auch bei hohen Temperaturen aufnehmen können aber bereits bei geringen Querkräften brechen und damit nur in Ausnahmefällen geeignet sind.

Eine andere Möglichkeit und ein erster Teil der Aufgabe dieser Erfindung ist, Distanzhalter zu definieren, die bei hoher Temperaturbeständigkeit eine extrem niedrige Wärmeleitfähigkeit von beispielsweise weniger als 0.01 W/mK aufweisen und damit auch mit wesentlich grösseren Querschnitten mechanisch robust realisierbar sind.

Vakuumspalt-Isolations-Elemente weisen meist an ihren Rändern ein in dieser Schrift als Rand-Distanzhalter bezeichnetes langgestrecktes, allenfalls beliebig gekrümmtes Bauteil auf, das die beiden Grenzplatten gasdicht miteinander verbindet und zusätzlich im Sinne eines Distanzhalters die durch den Luftdruck erzeugten Druckkräfte aufnimmt. Für genügend gute Vakuumspalt-Isolations-Elemente muss der Wärmetransport durch den Rand-Distanzhalter kleiner als 0.1 Watt/(Laufmeter,°K), besser kleiner als 0.05 Watt/(Laufmeter,°K) und vorzugsweise kleiner als 0.02 Watt/(Laufmeter,°K) sein.

Selbst wenn man zunächst die zur Aufnahme des Luftdruckes notwendige Druckfestigkeit nicht berücksichtigt, bleiben zur Erfüllung einer derart geringen Wärmeleitung und der zusätzlich notwendigen hohen Temperaturbeständigkeit und sehr hohen Gasdichtigkeit, nur sehr wenige gängige und preiswerte Materialien. Eines der wenigen bekannten derartigen Materialien ist beispielsweise ein zu dünnen Bändern verarbeiteter Edelstahl mit einer Wärmeleitfähigkeit von höchstens 25 W/mK, besser von höchstens 15 W/mK und einer Dicke von beispielsweise 0.005 bis 0.01 mm oder bis allerhöchstens 0.05 mm. Denkbar ist auch die Verwendung anderer gasdichter Bänder, wie beispielsweise mit dünnen Metall- und/oder Glas- bzw. Keramikschichten versehenen, temperaturfeste Kunststoffbänder wie beispielsweise Polyimid- (Kapton) oder PTFE- (Teflon) Bänder.

Im Allgemeinen zeigen sich derartige Bänder als nicht in der Lage, in ihrer Querrichtung wirkende hohe Druckkräfte aufzunehmen. Es ist deshalb ein zweiter Teil der Aufgabe dieser Erfindung, einen den gewünschten Rand-Distanzhalter ergebenden Verbund zu definieren, bei welchem ein dünnes, gasdichtes Band mit einem nur in einem schmalen Randbereich vorhandenen, temperaturbeständigen Material mit einer Wärmeleitfähigkeit von weniger als 0.01 W/mK kombiniert ist, das in der Lage ist das Band zu stützen und die auftretenden Druckkräfte zu übernehmen.

Dritter Teil der Aufgabe dieser Erfindung ist die Beschreibung eines Vakuumspalt-Isolations-Elementes, bei welchem die angesprochenen Distanzhalter und Randdistanzhalter im Einsatz sind.

Die genannte Aufgabe wird gelöst durch die Erfindung, wie sie in den Patentansprüchen definiert ist.

Ein erfindungsgemässes Vakuum-Isolationselement weist zwischen zwei gasdichten, in der Regel aber nicht zwingend quasi-parallelen, ebenen oder beliebig geformten Grenzplatten einen Vakuumspalt und eine Mehrzahl von Distanzhaltern zur Aufrechterhaltung des Vakuumspaltes auf.

Mindestens einige der Distanzhalter besitzen (bspw. in ihrem Inneren) ein (Füll-)Material, das aus einer Vielzahl von gegeneinander verschiebbaren Einzelelementen (z.B. einzelne Partikel bei einer Bauart 1 bzw. einzelne Filamente bei einer Bauart 2) besteht, welche bei sehr dichter Packung sich im Wesentlichen nur punkt- oder allenfalls linienförmig berühren und deshalb im Vakuum sehr wenig Wärme leiten. Dieses Füllmaterial ist - bspw. von einer Umhüllung (zum Beispiel einem zweiseitig verengten, gasdurchlässigen schlauchartigen Element bei einer ersten Bauart (nachfolgend Bauart 1) bzw. ebenfalls einem schlauchartigen Element oder aber einer Umwicklung mit einem dünnen draht-, filament- oder fadenartigem Bauteil bei einer zweiten Bauart (Bauart 2) - gegen den vom Zusammenpressen der Grenzplatten aufgrund des Luftdrucks erzeugten Innendruck des Füllmaterials zusammengehalten.

Die Umhüllung (ggf.) und das Füllmaterial sind vorzugsweise so, dass das Füllmaterial beim Abpumpen des Vakuumspalt-Isolations-Elementes auf einen Restdruck von höchstens 10⁻³ mbar mit evakuierbar ist. Das Füllmaterial weist ausserdem die Eigenschaft auf, dass es dann (nach Abpumpen) eine Wärmeleitfähigkeit von weniger als 0.01 W/mK, vorzugsweise weniger als 0.005 W/mK aufweist. Solche Füllmaterialien sind bspw. für am Markt erhältliche Vakuum-Isolations-Paneele an sich bekannt.

Distanzhalter dieser Art können einerseits über die Fläche des Vakuum-Isolationselements verteilte, Stützpunkte bildende Punkt-Distanzhalter (nachfolgend auch einfach 'Distanzhalter' genannt) sein. Andererseits können Distanzhalter dieser Art auch als Stützlinien bildende, die Grenzplatten an deren Rand stützende Rand-Distanzhalter ausgebildet sein.

Der Begriff "Punkt-Distanzhalter" stellt keine Angabe über die Form des Distanzhalters oder die Form der Anliegefläche an die Grenzplatte dar, welche von der Geometrie des Distanzhalters abhängt. Er schliesst nicht aus, dass der Distanzhalter in der Plattenebene ebenfalls länglich ist. Vielmehr dient der Begriff lediglich zur Verdeutlichung des Unterschieds zum entsprechend der Plattendimension langgezogenen Rand-Distanzhalter.Um ein Vakuum im Innern aufrecht erhalten zu können, müssen die Grenzplatten entlang deren Rand gasdicht miteinander verbunden sein. Das kann gemäss einer ersten Option durch ein von den Distanzhaltern separates Mittel geschehen, bspw. dadurch, dass die Grenzplatten zum Rand hin aufeinander zulaufen und dort linienartig verschweisst sind. Solches ist jedoch für viele Anwendungen nachteilig und führt zu einem Übergangsbereich mit schlecht definierten Isolationseigenschaften..

Daher können gemäss einer zweiten, bevorzugten Option, auch die Rand-Distanzhalter Mittel aufweisen, die Grenzplatten am Rand gasdicht miteinander zu verbinden und somit eine Doppelfunktion wahrnehmen.

Die meisten der in diesem Text diskutierten Ausführungsformen weisen sowohl mindestens einen Rand-Distanzhalter als auch im Inneren eine Mehrzahl von Punkt-Distanzhaltern auf. Es ist jedoch auch möglich, den Abstand zwischen den Grenzplatten bis zum Rand hin mit Punkt-Distanzhaltern zu gewährleisten, die in einem gewissen Abstand vom Rand angebracht sind. Die Gasdichtigkeit am Rand kann dann beispielsweise von einem dünnen Band sichergestellt sein.

Die verwendeten Materialien sind bevorzugt so gewählt dass alle verwendeten Bauelemente kurzzeitig, d.h. bis zu einer Stunde lang, Temperaturen von über 300°C widerstehen können ohne ihre wesentlichen physikalischen oder chemischen Eigenschaften dauerhaft einzubüssen, d.h. dass alle ausser dem allfälligen fliessfähigen Füllmaterial beispielsweise aus thermisch stabilen, allenfalls mit Schichten aus Metall oder Glas versehenen Kunststoffen wie Flüssig-Kristall-Polymere, PEEK, PTFE, PI oder aus Stahl oder Glas oder Basalt oder Kombinationen davon aufgebaut sind.

Insbesondere können alle verwendeten Bauelemente so gebildet sein, dass sie kurzzeitig, d.h. bis zu einer Stunde lang, Temperaturen von über 500°C widerstehen können ohne ihre wesentlichen physikalischen oder chemischen Eigenschaften dauerhaft einzubüssen, d.h. dass alle ausser dem allfälligen fliessfähigen Füllmaterial beispielsweise aus Stahl oder Glas oder Basalt oder Kombinationen davon aufgebaut sind.

Eine erste Möglichkeit zum Aufbau des geforderten Distanzhalters (Distanzhalter der Bauart 1), ist das Einbringen eines fliessfähigen, also beispielsweise pulverförmigen oder faserigen Füllmaterials, welches bei dem gewünschten Unterdruck von höchstens 10⁻⁴ bis höchsten 10⁻³ mbar eine deutlich geringere als die für den Distanzhalter gewünschte Wärmeleitfähigkeit von höchstens 0.01 W/mK aufweist, in ein als die Umhüllung dienendes Hüll-Material.

Das Hüll-Material kann bspw. langgestreckt und schlauchartig vorliegen. Das mit dem fliessfähigen Füllmaterial gefüllte schlauchartige Hüll-Material ist dann in Abständen, welche bei Punkt-Distanzaltern ungefähr der später gewünschten Distanz zwischen den Grenzplatten des Vakuumspalt-Isolations-Elementes entsprechen können, so verengt, dass es in einzelne, durch zwei nahezu oder ganz geschlossene Verengungen begrenzte, kurze Teilstücke zertrennbar ist. Die Herstellung der nahezu oder ganz geschlossenen Verengungen erfolgt beispielsweise jeweils durch eine Abbindung mit draht- oder fadenartigen Bauteilen, also beispielsweise mit weichem Stahldraht mit einem Durchmesser von beispielsweise kleiner als 0.1 mm oder mit klammerartigen Bauteilen aus einem beliebigen nicht ausgasenden Material oder durch ein Zusammenpressen und Fixieren beispielsweise mit Klebstoff oder flüssigem Glas. Sie kann aber auch mit beliebigen anderen geeigneten Bauteilen erfolgen.

Ein derartiger einzelner, durch zwei nahezu oder ganz geschlossene Verengungen begrenzter Abschnitt des mit fliessfähigem Füllmaterial gefüllte schlauchartigen Hüll-Materials bildet einen der gewünschten Distanzhalter der Bauart 1. Wird ein solcher Distanzhalter in der von Verengung zu Verengung zeigenden Richtung unter Druck gesetzt, wird das fliessfähige Füllmaterial durch das zweiseitig verengte schlauchartige Hüll-Material am seitlichen Wegfliessen gehindert und erzeugt entsprechende Zugkräfte in demselben. Da die beiden nahezu oder ganz geschlossenen Verengungen jeweils auf einer der beiden, ein Vakuumspalt-Isolations-Element begrenzenden Grenzplatten aufliegen, können sie sich nicht öffnen und erzeugen auch keine erhöhte Wärmeleitung von Grenzplatte zu Grenzplatte.

Auch andere Möglichkeiten, durch Hüll-Material eine Umhüllung zu bilden als durch einen in Teilstücke zertrennten Schlauch sind möglich, bspw. durch die Fertigung Einzel-Umhüllungen in der Art von Kissenhüllen, die durch das fliessfähige Material gefüllt und anschliessend bspw. mit aus der Textilindustrie bekannten Verfahren geschlossen werden. Die vorstehend beschriebene Herstellung auf Basis eines Hüllmaterial-Schlauchs ist jedoch fertigungstechnisch besonders effizient, was nachstehend noch eingehender beschrieben wird.Als fliessfähiges Material kommen alle bei den bekannten Vakuum-Isolations-Panels (VIP) ganzflächig vorhandenen Kernmaterialen, wie beispielsweise fumed silica, in pulverartiger Form in Frage. Es ist hinreichend bekannt, dass diese Materialien - auch in durch hohen Druck erreichter gepresster Form -bei hohen Temperaturen bereits ab groben Unterdrücken von kleiner als ca. 1 mbar - und deshalb natürlich auch bei den für das Vakuumspalt-Isolations-Element gewünschten Unterdrücken von höchstens 10⁻³ mbar - eine Wärmeleitfähigkeit von weniger als 0.005 W/mK aufweisen.

Das genannte schlauchartige Hüll-Material weist vorzugsweise mindestens einige der folgenden vorteilhaften Eigenschaften auf:.
- Es erzeugt einen möglichst geringen zusätzlichen Wärmefluss,
- es ist auch bei Temperaturen über 300°C , besser über 500°C zugfest,
- es gast im Vakuum nicht aus,
- und es ist (notwendigerweise) gasdurchlässig, damit sich auch in seinem Inneren, d.h. im Volumen des fliessfähigen Materials beim Abpumpen des Vakuumspalt-Isolations-Elementes der gewünschte Unterdruck einstellt.

Nicht ausgasende Materialien sind in Fachkreisen bekannt. Die Bedingung, dass ein Material nicht ausgast bedeutet in diesem Text, dass bevorzugt aus der Summe aller Bauteile des Vakuum-Isolations-Elements ins Innere austretende Restgasanteile nicht mehr als 10⁻⁵ mbar pro Jahr Partialdruck beitragen sollten.

Bekannte, am Markt erhältliche oder in grossen Mengen auch spezifisch herstellbare derartige Hüll-Materialien sind beispielsweise Schläuche, die mit textilen Methoden aus langgestreckten Filamenten hergestellt sind. Die zum Zwecke der vorliegenden Erfindung verwendbaren Filamente sind in nicht vollständiger Aufzählung beispielsweise aus e-Glas, s-Glas, Basalt, Aramid, Flüssig-Kristall-Polymer (Vectran) oder hochfesten Kunststoffen wie beispielsweise PEEK. Mit Glasfilamenten hergestellte entsprechende Schläuche sind üblicherweise unter dem Namen Glasflechtschläuche bekannt.

Glasflechtschläuche werden in der Regel aus sogenannten Glasrovings hergestellt, innerhalb derer eine Vielzahl von beispielsweise ca. 10 µm dicken quasi endlosen Glasfilamente unversponnen in parallelen flachen Bündeln mit hoher Zugfestigkeit (beispielsweise 1800 N/mm²) zusammengefasst sind. Die Zugfestigkeit bleibt bis zu Temperaturen von deutlich über 500°C erhalten. Da die Wandstärke derartiger Glasflechtschläuche in der Regel kleiner als 0.2 mm ist und da Glas bekanntlich eine relativ geringe Wärmeleitfähigkeit (ca. 1.25 W/mK) aufweist, resultiert das nahezu ideale Bauteil: zugfest auch bei hohen Temperaturen, gasdurchlässig und mit vernünftig niedriger Wärmeleitfähigkeit.

Die industrielle Herstellung der beschriebenen Distanzhalter der Bauart 1 ist mit einfachen Mitteln beispielsweise im Sinne der Herstellung von Fleischwürsten durchführbar. Beispielsweise wird in einer ersten einfachen Ausführung zu diesem Zwecke eine grosse Länge des schlauchartigen Hüll-Materials beispielsweise in Längsrichtung gefältelt auf ein Rohr aufgeschoben und vor dem vorderen Ausgang desselben wie weiter oben beschrieben verengt, also beispielsweise mit dünnem Draht abgebunden. Das fliessfähige Material wird nun mit definiertem Druck durch das Rohr in das schlauchartige Bauteil gepresst, wobei sich die nahezu oder ganz geschlossene Verengung vom vorderen Ende des Rohrs weg bewegt. Nach einer definierten Länge dieser Bewegung wird das schlauchartige Bauteil vor dem vorderen Ende des Rohres zweimal hintereinander erneut verengt und der so entstandene Distanzhalter der Bauart 1 abgetrennt. Danach wiederholt sich der geschilderte Vorgang so lange, bis die auf dem Rohr vorhandene Länge des schlauchartigen Hüll-Materials aufgebraucht ist. Es können beispielsweise auch mindestens zwei derartige Rohre vorhanden sein, die abwechslungsweise mit dem schlauchartigen Hüll-Material bestückt, bzw. zum Einpressen des fliessfähigen Materials verwendet werden. Auf diese Weise sind in einem quasi kontinuierlichen Prozess Distanzhalter der Bauart 1 im Sekundentakt herstellbar.

Eine alternative Möglichkeit zur industriellen Herstellung der beschriebenen Distanzhalter der Bauart 1 basiert auf der Art der Herstellung von Glasflecht- oder ähnlichen Schläuchen. Diese erfolgt im Wesentlichen so, dass das den Schlauch bildende Material - also bspw. die Glasrovings - mit Hilfe eines ringförmigen Werkzeugs geflochten werden und der entstehende Schlauch durch den inneren Hohlraum dieses Rings abläuft. Dies ermöglicht es, den Schlauch während seiner Entstehung mit beliebigen Materialen, also insbesondere auch mit dem gewünschten fliessfähigen Material, zu füllen. Die Füllung erfolgt so lose, dass der gefüllte Schlauch in den gewünschten Abständen in kurzem Abstand zweimal abbindbar ist, wobei das Füllmaterial an den Stellen der doppelten Abbindung weitgehend verdrängt ist. Danach ist der Schlauch zwischen den beiden naheliegenden Abbindungen in die gewünschten Distanzhalter der Bauart 1 zertrennbar.

Der Druck aufnehmende Teil eines langgestreckten, allenfalls beliebig gekrümmten Rand-Distanzhalters nach Bauart 1 kann ebenfalls wie vorstehend geschildert aufgebaut sein. Das genannte fliessfähige Füllmaterial, also beispielsweise fumed silica, wird mit einer der beiden oben geschilderten Methoden in ein langgestrecktes schlauchartiges Hüll-Material, also beispielsweise in einen Glasflechtschlauch eingebracht und dieses wird anschliessend an den beiden Enden mit je einem Endverschluss begrenzt. Die Druckbelastung erfolgt hier jedoch im Allgemeinen quer zur Längsrichtung dieses mit fliessfähigem Füllmaterial gefüllten schlauchartigen Bauteils, wodurch auch die beiden Endverschlüsse unter Druck gesetzt sind. Die notwendige Druckfestigkeit der Endverschlüsse kann ohne wesentliche Erhöhung der lokalen Wärmeleitfähigkeit und ohne zusätzliche Baulänge beispielsweise so gewährleistet sein, dass das schlauchartige Bauteil zur Seite einer der beiden Grenzplatten des Vakuumspalt-Isolations-Elementes hin umgefaltet und mit Befestigungsmittel, bspw. einem (dünnen) Edelstahldraht festgehalten oder auf andere geeignete Art fixiert ist. Bei der Evakuierung des Vakuumspalt-Isolations-Elementes wird dann die entsprechende Grenzplatte gegen die Umfaltung des schlauchartigen Hüll-Materials gepresst und hält dieses auch gegen hohen Druck in der gewünschten Position.

Das beispielsweise zur Erzeugung der Gasdichtigkeit eines Rand-Distanzhalters der Bauart 1 verwendete, gasdichte Band, also beispielsweise ein dünnes Edelstahlband oder ein metallbeschichtetes PI- oder PTFE-Band, ist zum Beispiel dreiseitig um dieses mit fliessfähigem Material gerollte schlauchartige Hüll-Material herumgeformt und an seinem so entstandenen, oberen und unteren Schenkeln so mit den beiden Grenzplatten des Vakuumspalt-Isolations-Elementes gasdicht verbunden, dass die offene, d.h. nicht gasdichte Seite des dreiseitig mit gasdichtem Band umhüllten schlauchartigen Gebildes zum Inneren des Vakuumspalt-Isolations-Elementes zeigt. Damit ist das Volumen des fliessfähigen Materials im schlauchartigen Gebilde nach dem Abpumpen des Vakuumspalt-Isolations-Elementes ebenfalls evakuiert und weist die gewünschte geringe Wärmeleitung auf.

Alternativ ist die Gasdichtheit am Rand auch so gewährleistbar, dass zunächst der Rand-Distanzhalter der Bauart 1 ohne gasdichtes Band am Rand zwischen die beiden Grenzplatten des Vakuumspalt-Isolations-Elementes eingebracht ist und das gasdichte Band, also beispielsweise ein dünnes Edelstahlband oder ein metallbeschichtetes PI- oder PTFE-Band, um die Aussenseite der Grenzplatten und des Rand-Distanzhalters der Bauart 1 herumgeformt und gasdicht mit den Grenzplatten verbunden ist.

Die gasdichte Verbindung zwischen dem gasdichten Band und den beiden Grenzplatten ist beispielsweise durch Löten oder durch Kleben mit einem nicht ausgasenden, temperaturfesten - d.h. in der Regel anorganischen - Klebstoff durchgeführt.

Es ist möglich, den so gestalteten Rand-Distanzhalter der Bauart 1- vor dem Verbinden mit den beiden Grenzplatten - abzuwinkeln oder zu krümmen, wobei natürlich die beiden Schenkel des dreiseitig gefalteten gasdichten Bandes entsprechend zu falten sind, ohne das gasdichte Band zu verletzen. Auf diese Weise ist ein den gesamten Rand eines Vakuumspalt-Isolations-Elementes umschliessender gasdichter Rand-Distanzhalter herstellbar. Die gesamte Randlänge darf hierbei beliebig lang sein, weil es möglich ist, mehrere Teilstücke von dreiseitig mit gasdichtem Band umhüllten schlauchartigen Bauteilen gasdicht aneinander zu reihen, indem dafür gesorgt ist, dass sich die dreiseitig gefalteten gasdichten Bänder gegenseitig überlagern und gasdicht miteinander verbunden sind.

Eine zweite Möglichkeit zum Aufbau des geforderten Distanzhalters (Distanzhalter der Bauart 2) ist durch die Verwendung einer Vielzahl von im Wesentlichen quasi-parallel verlaufenden Filamenten gegeben, die so kombiniert sind, dass sich ein dickes bündelartiges Gebilde ergibt. Die Dicke oder die Breite dieses bündelartigen Gebildes entspricht beispielsweise dem später gewünschten Abstand zwischen den Grenzplatten eines Vakuumspalt-Isolations-Elementes.

Die dicken Bündel können beispielsweise gemäss einer ersten Möglichkeit durch das Aufeinanderschichten einer entsprechenden Anzahl (beispielsweise 10 bis 50) von beispielsweise aus Glasfilamenten (z.B. Glasfäden) oder anderen geeigneten Materialien mit filamentartigen (fadenartigen) Einzelelementen gewobenen Bändern hergestellt sein. Da die gewobenen Bänder in ihrer Querrichtung eine genügende Festigkeit aufweisen, muss ein sich seitlich gegeneinander Verschieben der Bänder durch eine einfache, später nicht mehr belastete Hülle nur solange verhindert werden bis sie zwischen den beiden Grenzplatten eines Vakuumspalt-Isolations-Elementes unter Druck stehen. Unter Belastung ist ein derartiger Aufbau auch ohne Hülle stabil, womit die weiter unten im Zusammenhang mit gebündelten Rovings besprochene Problematik des Umwindens hier nicht relevant ist. Die bis nach dem Einbau notwendige einfache Hülle kann beispielsweise mittels eines seitlichen Beschichtens des Bänderbündels, - also beispielsweise durch Auflaminieren entsprechender Kunststoffbänder oder Aufsprühen eines Klebstoffs von beiden Seiten her oder durch beliebige andre Methoden - hergestellt sein. Da die Hülle unter Belastung nicht mehr benötigt wird, darf sie sich während des beim Evakuieren notwendigen Ausheizens auflösen, so dass hierfür Kunststoffe mit sehr niedriger Schmelz bzw. Verdampfungstemperatur zum Einsatz kommen können.

Das dicke Bündel kann beispielsweise aber gemäss einer zweiten Möglichkeit auch durch die Zusammenführung einer Vielzahl, also von beispielsweise 10 bis 50 Glasrovings oder mehr hergestellt sein. Es ist bekannt, dass die Wärmeleitfähigkeit in Querrichtung von quasi-parallel verlaufenden Filamenten in einem Vakuum von kleiner als 0.1 mbar - und deshalb natürlich auch bei den für das Vakuumspalt-Isolations-Element gewünschten Unterdrücken von höchstens 10⁻³ mbar - Werte von deutlich weniger als 0.005 W/mK annimmt. Weiter ist bekannt, dass die Druckfestigkeit der als nicht ausgasende Filamente beispielsweise in Frage kommenden Glas- oder Basaltfilamente in ihrer Querrichtung in der Grössenordnung von 3000 N/ mm² liegt.

Würde ein derartiges, aus nicht verbundenen, quasi-parallel verlaufenden Filamenten aufgebautes, bspw. der zweiten Möglichkeit entsprechendes, bandartiges Gebilde in seiner Querrichtung unter Druck gesetzt, so würden die Filamente unerwünschter Weise seitlich ausweichen und kein oder nur ein ungenügender Distanzhaltungseffekt stattfinden. Um dies zu verhindern ist das bündelartige Gebilde mit einer Umhüllung versehen, welche die den Umfang im Schnitt senkrecht zur Filament-Laufrichtung begrenzt und also das bündelartige Gebilde zusammenhält.

Gemäss einer ersten Option kann eine solche Umhüllung wie in den vorstehenden Ausführungsbeispielen der Bauart 1 ein textilartiges Gebilde, bspw. ein Flechtschlauch oder dergleichen sein.

In diesem Fall können die quasi parallel verlaufenden Filamente direkt während der Herstellung des Flechtschlauches in denselben eingebracht sein. Die Herstellung von Glasflechtschläuchen oder ähnlichen Schläuchen erfolgt im Wesentlichen so, dass das den Schlauch bildende Material - also bspw. die Glasrovings - mit Hilfe eines ringförmigen Werkzeugs geflochten werden und der entstehende Schlauch durch den inneren Hohlraum dieses Rings abläuft. Dies ermöglicht es, den Schlauch während seiner Entstehung mit beliebigen Materialen, also insbesondere auch mit den quasi parallel verlaufenden Filamente, zu füllen. Derartig aufgebaute Elemente sind - meist unter der Bezeichnung "Kordel" - am Markt erhältlich. In gewünschten Abständen ist die Oberfläche des Schlauchs so fixiert, dass er nach einer Zertrennung nicht ausfasert. Danach ist der gefüllte Schlauch bei diesen Fixierungen in die gewünschten Distanzhalter der Bauart 2 zertrennbar.

Gemäss einer zweiten Option kann die Umhüllung - weil das Füllmaterial durch Filamente gebildet wird - durch ein dünnes draht-, filament- oder fadenartiges Hüll-Material gebildet sein, also beispielsweise einem Edelstahldraht mit Durchmesser kleiner als 0.1 mm oder einem Glas- bzw. Basaltfilament oder mit einem gesponnenen Faden aus Glas- oder Basaltfasern oder einem beliebigen anderen zug- und temperaturfesten fadenartigen Gebilde im Wesentlichen schraubenlinienartig umwunden.

Der Windungsabstand dieser im Wesentlichen schraubenlinienartigen Umwindung ist so gewählt, dass sie der zusätzlichen Wärmeleitung wegen möglichst gross, aber klein genug ist damit die Umwindung die auf sie wirkenden Zugkräfte aufnehmen kann. Bei der Umwindung mit einem beispielsweise 0.04 mm dicken Edelstahldraht beträgt der zulässige Windungsabstand beispielsweise 0.1 bis 2.5 mm. Damit ist sichergestellt, dass ein nicht ausgasendes, bei hohen Temperaturen druckfestes Gebilde mit sehr niedriger Wärmeleitfähigkeit herstellbar ist.

Beispielsweise ist die angesprochene, im Wesentlichen schraubenlinienartige Umwindung mittels variierender Steigung so gestaltet, dass das dicke bündelartige Gebilde ohne auszufasern in Teilstücke von gewünschter Länge zertrennbar ist. Eines dieser Teilstücke bildet dann den gewünschten Distanzhalter der Bauart 2.

In einer Variante kann das aus quasi-parallel verlaufenden Filamenten aufgebaute dicke bündelartige Gebilde zur Stabilisierung zweiseitig mit einem ungefähr gleich breiten, prinzipiell beliebig dicken Band, beispielsweise einem z.B. 0.1 mm bis 0.3, insbesondere 0.1 mm bis 0.2 mm mm dicken Stahlband oder auch mit einem entsprechenden nicht ausgasenden, festen Band aus einem beliebigen anderen Material versehen sein, bevor es mit dem genannten draht-, filament- oder fadenartigen Hüll-Material schraubenlinienartig umwunden ist. Dies hat den Vorteil, dass sich zwei wohl definierte Flächen ergeben, welche später als Auflagen auf die ein Vakuumspalt-Isolations-Element begrenzenden Grenzplatten dienen.

Ein langgestreckter, allenfalls beliebig gekrümmter Rand-Distanzhalter der Bauart 2 kann entsprechend eines (Punkt-)Distanzhalters der Bauart 2 aufgebaut sein, wobei sich Punkt-Distanzhalter und der Druck aufnehmende Teil des Rand-Distanzhalters bspw. im Wesentlichen nur durch die Länge unterschieden. Das geschilderte, im Wesentlichen schraubenlinienartig umwundene, dicke, bündelartig Gebilde aus quasi-parallel verlaufenden Filamenten, das zum Aufbau eines Rand-Distanzhalters nicht zwingend aber vorteilhafterweise mit den im obigen Absatz geschilderten Bändern zur Stabilisierung, versehen ist, wird hierzu als langes dickes Bündel beispielsweise dreiseitig mit einem beispielsweise 0.005 bis 0.01 mm, höchstens aber 0.05 mm dicken Edelstahlband oder einem anderen temperaturfesten und gasdichten Band umformt. Damit ist nach der gasdichten Verbindung der beiden Schenkel des gasdichten Bandes mit je einer der beiden Grenzplatten eines Vakuumspalt-Isolations-Elementes ein nach aussen gasdichter und nach innen evakuierbarer Rand-Distanzhalter entstanden.

Alternativ kann das beispielsweise 0.005 bis 0.01 mm, höchstens aber 0.05 mm dicken Edelstahlband oder andere temperaturfeste und gasdichte Band auch nachträglich von aussen um die beiden Grenzplatten und den Rand-Distanzhalter der Bauart 2 herumgeformt und gasdicht mit den Beiden Grenzplatten verbunden sein.

Es ist möglich, den so gestalteten Rand-Distanzhalter der Bauart 2 - vor der Verbindung mit den beiden Grenzplatten - abzuwinkeln oder zu krümmen, wobei allenfalls das Filamentbündel entsprechend anzuschneiden und die beiden Schenkel des dreiseitig gefalteten gasdichten Bandes entsprechend zu falten sind ohne das gasdichte Band zu verletzen. Auf diese Weise ist ein den gesamten Rand eines Vakuumspalt-Isolations-Elementes umschliessender gasdichter Rand-Distanzhalter herstellbar. Die gesamte Randlänge darf hierbei beliebig lang sein, weil es ohne Weiteres möglich ist, mehrere Teilstücke derartiger Rand-Distanzhalter gasdicht aneinander zu reihen, indem dafür gesorgt ist, dass sich die dreiseitig gefalteten gasdichten Bänder gegenseitig überlagern und gasdicht miteinander verbunden sind.

Gemäss Ausführungsformen der Erfindung können die geschilderten Bauarten 1 und 2 der Distanzhalter auch miteinander kombiniert sein. So ist es beispielsweise möglich, dass im Inneren eines Vakuumspalt-Isolations-Elementes Distanzhalter der Bauart 1, also mit fliessfähigem Material gefüllte, zweiseitig verengte, schlauchartige Teilstücke im Einsatz sind, während der langgestreckte, allenfalls beliebig gekrümmte Rand-Distanzhalter der Bauart 2, also einem mit gasdichtem Band dreiseitig umformten dicken Bündel aus quasi-parallel verlaufenden Filamenten, entspricht.

Ein Vakuumspalt-Isolations-Element mit den geschilderten Distanzhaltern bzw. Rand-Distanzhaltern ist am Beispiel einer ebenen Vakuum-Isolationsplatte beispielsweise so aufgebaut, dass die Distanzhalter in bspw. regelmässigen Abständen - oder auch entsprechend speziellen Anforderungen unregelmässig verteilt - zwischen zwei gleich grosse - vorzugsweise biegesteife - Grenzplatten eingebracht und die Grenzplatten mit Hilfe der geschilderten Rand-Distanzhalter entlang ihren Rändern gasdicht mit einander verbunden sind. Der Abstand zwischen den Grenzplatten ist prinzipiell frei wählbar, weil der Wärmefluss durch das Vakuum pro Flächeneinheit nur vom Restdruck des Vakuums abhängt. Aus konstruktiven Gründen beträgt er aber beispielsweise 1 mm bis 20 mm und vorzugsweise 2 mm bis 10 mm, insbesondere 3 mm bis 7 mm. Die Grösse des bspw. regelmässigen Abstands zwischen den Distanzhaltern ist abhängig von der Biegesteifigkeit der Grenzplatten und vom erzeugten Druck auf die Distanzhalter, vorteilhafterweise liegt er beispielsweise zwischen 100 bis 200 mm. Kommen für die Grenzplatten beispielsweise total ca. 10 mm dicke Verbundplatten - beispielsweise bestehend aus zwei dünnen Stahlplatten mit einem geeigneten Zwischenmaterial - zum Einsatz darf der Abstand zwischen den Distanzhaltern bis zu 200 mm betragen.

Besonders vorteilhaft sind die Distanzhalter so ausgebildet und verteilt, dass sie nur zur punkt- bzw. (insbesondere am Rand) linienartigen Aufnahme des Druckes dienen und daher nur einen möglichst kleinen Bruchteil der Grenzplatten-Fläche bedecken. Insbesondere beträgt bevorzugt der Anteil der von Distanzhaltern bedeckten Fläche höchstens 10%. Beispielsweise beträgt er mit Ausnahme des Randes und der Rand-Distanzhalter höchstens 5% oder gar höchstens 3% oder höchstens 2%. Oft ist es von Vorteil, wenn die mit Ausnahme des Randes von den Distanzhaltern bedeckte Fläche zur guten Abstützung der Grenzplatten mindestens 0.3%, bezogen auf die ganze Fläche z.B. mindestens 1 % beträgt. Die Grenzplatten können - das bezieht sich auf Ausführungsformen der Erfindung beider Bauarten - als Verbundplatten aufgebaut sein, und bspw. eine innere und eine äussere Platte, bspw. Stahlplatten, sein, mit einem dazwischen angeordneten Abstand haltenden und/oder die relative Plattenposition verbindenden Mittel zum Gewähren der notwendigen Steifigkeit (bspw. ein geschäumter Kunststoff und/oder in regelmässigen Abständen angeordnete Sicken mit befestigten Verstrebungen etc.). Gemäss bevorzugten Ausführungsformen beider Bauarten kann ohne Verlust an Isolationsfähigkeit vorgesehen sein, dass im Bereich des Rand-Distanzhalters die innere der Platten zur äusseren Platte hin abgebogen ist. Beispielsweise kann die innere Platte L-förmig abgebogen sein und im Bereich des Rand-Distanzhalters an der äusseren Platte anliegen und bspw. auch mit dieser verbunden sein. Durch das Abbiegen der inneren Platte gegen aussen ist im Randbereich der innere Abstand zwischen den Grenzplatten vergrössert. Das ermöglicht die Verwendung dickerer (in Richtung senkrecht zur Grenzplattenebene gemessen) Rand-Distanzhalter, mit entsprechend verringerter Wärmeleitfähigkeit.

Der Zwischenraum zwischen den Deckplatten ist evakuiert - insbesondere auf einen Druck von höchstens 10⁻³mbar oder höchstens 10⁻⁴mbar - und vorzugsweise abgesehen von den Distanzhaltern frei von festen oder flüssigen Elementen, insbesondere von beide Deckplatten berührenden festen oder flüssigen Elementen. Es kann jedoch eine - oder mehrere - zusätzliche, die Wärmestrahlung mildernde (reflektierende), sich flächig im Zwischenraum zwischen den Deckelementen erstreckende Zwischenschicht (z.B. Aluminiumfolie oder dergleichen) vorhanden sein. Eine solche Zwischenschicht kann gemäss einer ersten Option jeweils zwischen Paaren von Punkt-Distanzhaltern gehalten sein - d.h. die Ausdehnung der einzelnen Punkt-Distanzhalter ist dann in Richtung senkrecht zur Plattenebene kleiner als der Abstand zwischen den beiden Grenzplatten, bspw. je halb so gross (oder noch kleiner, wenn mehrere, gegeneinander abgestützte Zwischenschichten vorhanden sind). Gemäss einer zweiten Option kann eine Zwischenschicht dort Löcher aufweisen, wo die - dann sich zwischen den Grenzplatten erstreckenden - Punkt-Distanzhalter sich befinden. Die Abstützung der Zwischenschicht gegenüber den Grenzplatten kann dann durch andere Mittel, bspw. Füsse, geschehen, wobei die Berührungsflächen insbesondere zur wärmeren der Grenzplatten möglichst minimal sein sollten. Insbesondere können solche Füsse abgebogene Partien der die Zwischenschicht bildenden Folien sein, die nur entlang ihrer Kante die Grenzplatten berühren.

In der nachfolgenden Beschreibung und den Figuren wird die Zwischenschicht nicht explizit dargestellt; es versteht sich aber, dass die Lehre aller Ausführungsformen auch für Vakuumspalt-Isolations-Elemente mit mindestens einer Zwischenschicht anwendbar ist.

Im Folgenden werden Ausführungsformen von Distanzhaltern und Vakuumspalt-Isolations-Elementen anhand von Zeichnungen erläutert.
- Figur 1 zeigt die nicht massstäbliche perspektivische Schnitt-Skizze des Aufbauprinzipes eines Distanzhalters nach Bauart 1.
- Figur 2 zeigt die nicht massstäbliche perspektivische Schnitt-Skizze des Aufbauprinzipes eines langgestreckten, allenfalls beliebig gekrümmten Rand-Distanzhalters nach Bauart 1.
- Figur 3 zeigt die nicht massstäbliche perspektivische Prinzip-Skizze des Aufbaus und einer Herstellmöglichkeit eines Distanzhalters nach Bauart 2.
- Figur 4 zeigt die nicht massstäbliche perspektivische Prinzip-Skizze des Aufbaus und einer Herstellmöglichkeit eines alternativen Distanzhalters nach Bauart 2b.
- Figur 5 zeigt die nicht massstäbliche perspektivische Prinzip-Skizze des Aufbaus und einer Herstellmöglichkeit eines langgestreckten, allenfalls beliebig gekrümmten Rand-Distanzhalters nach Bauart 2.
- Figur 6 zeigt die nicht massstäbliche perspektivische Prinzip-Skizze des Schnitts durch ein Vakuumspalt-Isolations-Element.

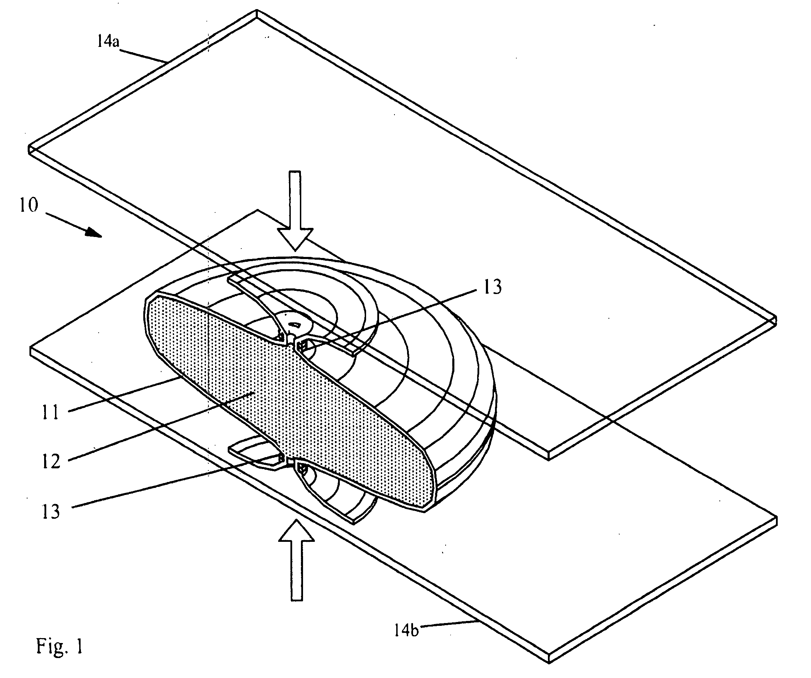

**Figur 1** zeigt die nicht massstäbliche, perspektivische Schnitt-Skizze des Aufbauprinzips eines Distanzhalters 10 nach Bauart 1. Ein gasdurchlässiges, schlauchartiges Hüll-Material 11 ist mit einem fliessfähigen Füllmaterial 12 gefüllt und zweiseitig durch eine nahezu oder ganz geschlossene Verengung 13 verschlossen. Die später nach Einbau zwischen die zwei Grenzplatten 14a, 14b eines Vakuumspalt-Isolations-Elementes wirkende Druckrichtung ist mittels den beiden Pfeilen angedeutet.

Jede der nahezu oder ganz geschlossenen Verengungen 13 ist beispielsweise durch eine Abbindung mit draht- oder fadenartigen Bauteilen, also beispielsweise mit weichem Stahldraht mit einem Durchmesser von beispielsweise kleiner als 0.1 mm oder mit klammerartigen Bauteilen aus einem beliebigen nicht ausgasenden Material oder durch ein Zusammenpressen und Fixieren beispielsweise mit Klebstoff oder flüssigem Glas hergestellt. Sie kann aber auch mit beliebigen anderen geeigneten Bauteilen hergestellt sein.

Durch das Anpressen der Grenzplatten 14a, 14b eines Vakuumspalt-Isolations-Elementes auf die nahezu oder ganz geschlossenen Verengungen 13 werden die zur Erzeugung der Verengung 13 verwendeten Materialien unter Einsatzbelastung weitgehend der Aufgabe enthoben, die Verengung 13 zusammen zu halten. Zusätzlich liegen die nahezu oder ganz geschlossenen Verengungen 13 jeweils an einer der Grenzplatten 14a, 14b an und tragen deshalb nicht zur Wärmeübertragung von Grenzplatte 14a zu Grenzplatte 14b bei. Aus demselben Grund muss die nahezu oder ganz geschlossene Verengung 13 auch nicht vollständig dicht sein. Dies bedeutet, dass beliebige nicht ausgasende Materialen zur Erzeugung der nahezu oder ganz geschlossenen Verengungen 13 verwendbar sind. Unter anderem geeignet sind beispielsweise drahtartige oder klammerartige Bauteile aus einem beliebigen Metall. In Figur 1 ist als Beispiel die Umwicklung mit einem weichen, d.h. nicht zurück federnden metallischen Draht angedeutet.

Das fliessfähige Füllmaterial 12, sollte nicht so dünnflüssig sein, dass es unter Druck durch das gasdurchlässige schlauchartige Hüll-Material 11 hindurch dringt, womit flüssige oder gar gasförmige Materialien nicht in Frage kommen. In Frage kommen bis zu Temperaturen von über 500°C stabile, nicht ausgasende, pulverförmige oder faserartige Materialien. Da das fliessfähige Füllmaterial 12 unter den später herrschenden Vakuumbedingungen von höchsten 10⁻³ mbar oder weniger eine möglichst geringe Wärmeleitfähigkeit von deutlich weniger als 0.01 W/mK aufweisen soll, drängen sich die in den sogenannten VIP (Vakuum-Isolations-Panel) als ganzflächiger Kern verwendeten Materialien auf. In nicht vollständiger Aufzählung sind dies beispielsweise mikroporöse oder sehr feine, auch pulverartig zur Verfügung stehende Stoffe wie fumed silica, pyrogene Kieselsäurepulver, Perlite, Zeolithe sowie kurze oder lange und quasi-parallele oder sehr lange und geknäuelte Glas- oder Basaltfasern. Alle diese Stoffe sind bis zu Temperaturen von deutlich über 500°C formstabil, gasen unter Vakuum nicht aus und weisen spätestens bei einem Vakuum von 10⁻² mbar, eine Wärmeleitfähigkeit von höchstens 0.005 W/mK auf.

Das schlauchartige Hüll-Material 11 ist beispielsweise ein Glasflechtschlauch, bei welchem beispielsweise Glasfilament-Rovings miteinander verflochten sind, die jeweils aus einer Vielzahl, also beispielsweise 1000 bis 20'000 einzelner, quasi unendlich langer Glasfilamente von beispielsweise 10 bis 20 µm Dicke bestehen. Derartige am Markt erhältliche Glasrovings können beispielsweise Zugkräfte von mindestens 1800 N/mm², also in einer Ausführung mit beispielsweise 6'000 Einzelfilamenten total ca. 1300 N, aufnehmen. Dies gilt auch noch - zumindest kurzzeitig, d.h. für mindestens eine Stunde - bei Temperaturen knapp über 500°C. Aufgrund ihres geschilderten Aufbaus sind Glasflechtschläuche hochgradig gasdurchlässig, so dass ihr Inneres nach dem Abpumpen eines Vakuumspalt-Isolations-Elementes ebenfalls evakuiert ist. Dank der Tatsache dass sie vollständig aus Glas bestehen und allfällige bei ihrer Herstellung verwendete organische Hilfsstoffe mit Temperaturbehandlung vollständig entfernbar sind, gasen sie im Vakuum auch nicht aus. Aufgrund der geringen Wärmeleitfähigkeit von Glas (ca. 1.25 W/mK) hält sich auch der Wärmetransport über den Glasflechtschlauch in annehmbaren Grenzen. Die in grossen Mengen standardmässig hergestellten und damit sehr preiswerten Glasflechtschläuche sind damit ein geeignetes Bauteil für Distanzhalter 10 der in Figur 1 skizzierten Bauart 1.

Alternativ zu Glasflechtschläuchen können auch mit anderen textilen Methoden, wie beispielsweise mit Weben hergestellte Schläuche auf der Basis temperaturfester, nicht ausgasender und zugfester Filamente zum Einsatz kommen.

Alternativ zu Glasfilamenten können auch andere nicht ausgasende, temperaturbeständige und zugfeste Filamente mit geringer Wärmeleitfähigkeit für das schlauchartige Hüll-Material 11 zum Einsatz kommen. Ein Beispiel dafür sind Basalt-Filamente, welche - bei gegenüber den genannten Glasfilamenten leicht erhöhter Zugfestigkeit - sehr ähnliche Eigenschaften aufweisen. In Frage kommen eingeschränkt auch Filamente auf Flüssig-Kristall-Polymer Basis (Vectran) und Filamente auf Basis hochfester Kunststoffe (z.B. Polyetheretherketon, PEEK) die genügend kleine Wärmeleitkoeffizienten (Vectran ca. 1.5 W/mK und PEEK ca. 0.25 W/mK in Filament-Längsrichtung) und genügend hohe Zugfestigkeit bei Raumtemperatur aufweisen, die Zugfestigkeit bei Temperaturen zwischen 300°C und 400°C verlieren, beim Erkalten aber wieder zurückgewinnen. Dies bedeutet, dass mit derartigen Filamenten ein Abpumpen bei Temperaturen von über 300°C nur dann durchgeführt werden darf, wenn durch entsprechende Vorrichtungen dafür gesorgt ist, dass während des Abpumpens die Druck-Wirkung des Luftdruckes aufgehoben ist. Metallische (inklusive Edelstahl) oder Kohlefaser-Filamente kommen des zu hohen Wärmeleitkoeffizienten wegen nur eingeschränkt in Frage. Aramid-Filamente (z.B. Kevlar) weisen zwar genügend kleine Wärmeleitkoeffizienten (ca. 2.5 W/mK in Filament-Längsrichtung) und hohe Zugfestigkeit bei Raumtemperatur auf, verlieren aber die Zugfestigkeit bei Temperaturen knapp unterhalb 300°C dauerhaft vollständig und sind deshalb nur eingeschränkt geeignet.

Der in Figur 1 skizzierte Distanzhalter 10 ist beispielsweise mit einem Glasflechtschlauch 11 von 0.2 mm Wandstärke und mit fumed silica als fliessfähiger Füllung 12 aufgebaut. Unter Druck ist der Distanzhalter beispielsweise 5 mm hoch und weist einen Durchmesser von 5 mm auf. Unter diesen Randbedingungen ergibt sich ein Wärmefluss durch das Füllmaterial 12 von ca. 2.4*10⁻⁵ W/K und durch den Glasflechtschlauch von ca. 6.1*10⁻⁴ W/K, womit sich der gesamte Wärmedurchgang durch den Distanzhalter 10 zu ca. 6.34*10⁻⁴W/K ergibt. Werden diese Distanzhalter 10 in einem Abstand von 150 mm in ein Vakuumspalt-Isolations-Element eingebracht, so ergibt sich ein totaler Wännefluss durch die Summe der Distanzhalter von ca. 0.02 W/m²K.

Dieser Wert entspricht der angestrebten Zielsetzung, ist aber in Ausführungsformen noch weiter verbesserungsfähig. Die obigen Werte zeigen, dass der Wärmefluss durch das schlauchartige Bauteil 11 bestimmend ist. Dieses Bauteil kann bei Bedarf in wärmetechnischer Sicht weiter optimiert werden. Die geschilderten Glasflechtschläuche sind mit sogenannten e-Glas Filamenten aufgebaut. Kommen statt dieser Filamente s-Glas Filamente zum Einsatz, welche eine um ca. einen Faktor 2 höhere Zugfestigkeit aufweisen, kann die Wandstärke des schlauchartigen Bauteils 11 und damit die Wärmeleitung durch dasselbe entsprechend reduziert sein. Zusätzlich ist es mit textilen Herstellungsmethoden möglich sogenannte unidirektionale Gebilde herzustellen. Dies bedeutet für die schlauchartigen Bauteile 11, dass der Grossteil der Filamente, also beispielsweise 80% derselben, in Umfangsrichtung verläuft und nur ein kleiner Prozentsatz in der von Grenzplatte 14a zu Grenzplatte 14b zeigenden Längsrichtung. Damit ist der Wärmetransport durch das schlauchartige Bauteil 11 nochmals mindestens auf ein Drittel absenkbar. Durch Kombination der genannten Massnahmen besteht das Potential den Wärmefluss durch einen einzelnen Distanzhalter10 der Bauart 1 auf ca. 1*10⁻⁴ W/mK und für die Summe der Distanzhalter auf ca. 0.0035 W/m²K abzusenken.

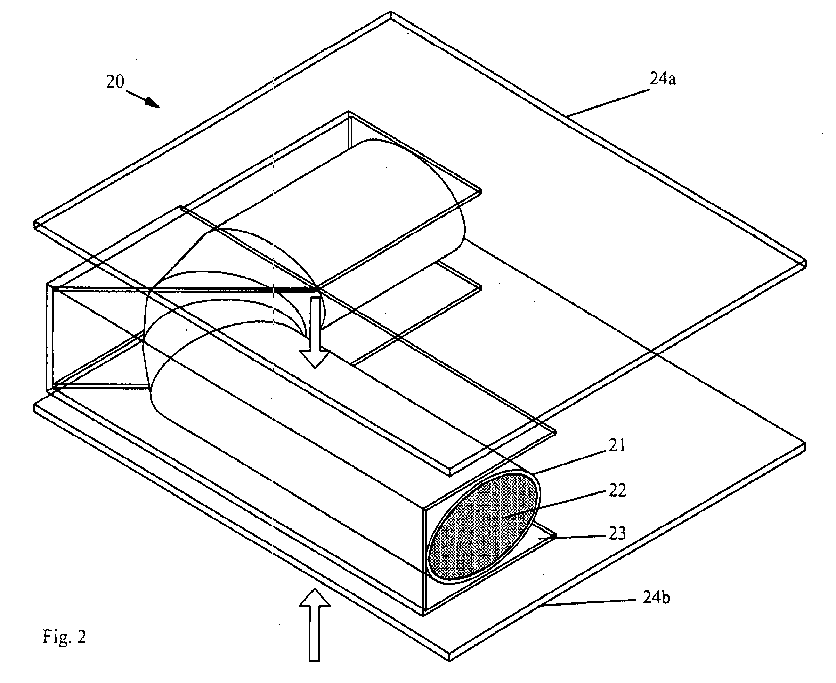

**Figur 2** zeigt die nicht massstäbliche perspektivische Schnitt-Skizze des Aufbauprinzipes eines langgestreckten, allenfalls beliebig gekrümmten Rand-Distanzhalters 20 nach Bauart 1. Ein gasdurchlässiges, schlauchartiges Hüll-Material 21 ist mit einem fliessfähigen Füllmaterial 22 gefüllt und an beiden Enden jeweils durch einen nicht in Figur 2 dargestellten Verschluss verschlossen. Dieser Verschluss ist beispielsweise durch Umfalten des gasdurchlässigen, schlauchartigen Bauteils 21 und durch Fixieren dieser Umklappung beispielsweise durch Umwinden mit einem dünnen Draht hergestellt. Ein in Figur 2 durchsichtig dargestelltes dünnes, gasdichtes

Band 23 ist dreiseitig um das mitfliessfähigem Material 22 gefüllte gasdurchlässige, schlauchartige Hüll-Material 21 geformt. Die später nach Einbau zwischen die zwei Grenzplatten 24a, 24b eines Vakuumspalt-Isolations-Elementes wirkende Druckrichtung ist mittels den beiden Pfeilen angedeutet.

Sämtliche Materialien des mit einem fliessfähigen Füllmaterial 22 gefüllten schlauchartigen Hüll-Materials 21 entsprechen den weiter oben besprochenen Materialien für den Distanzhalter der Bauart 1.

Das gasdichte, dreiseitig geformte Band 23, trägt massgeblich zum Wärmetransport von Grenzplatte 24a zu Grenzplatte 24b bei. Aus diesem Grunde sowie der notwendigen Formbarkeit, der grossen erforderlichen Gasdichtigkeit und der gewünschten Temperaturbeständigkeit bis über 500°C wegen ist die Materialauswahl eingeschränkt. In Frage kommen in erster Linie dünne Edelstahlbänder (Wärmeleitfähigkeit 15 W/mK) mit einer Dicke von 0.005 oder 0.01 bis allerhöchsten 0.05 mm. Mit dünnen, d.h. beispielsweise bis total 1 µm dicken Metall- oder Glasschichten versehene Bänder aus thermisch stabilem Kunststoff wie beispielsweise PTFE (Teflon) oder PI (Kapton) können Temperaturen bis knapp über 400°C standhalten und kommen deshalb ebenfalls in Frage.

Der in Figur 2 skizzierte Rand-Distanzhalter 20 ist beispielsweise mit einem Glasflechtschlauch 21 von 0.2 mm Wandstärke und mit fumed silica als fliessfähiger Füllung 22 aufgebaut. Unter Druck ist er beispielsweise 5 mm hoch und weist eine Breite von 5 mm auf. Das dreiseitig geformte, gasdichte Band 23 ist beispielsweise 0.01 mm dick und besteht aus Edelstahl. Unter diesen Randbedingungen ergibt sich ein Wärmefluss durch das Füllmaterial 22, den Glasflechtschlauch 21 und das Stahlband 23 von total ca. 0.12 W/(Laufmeter,°K).

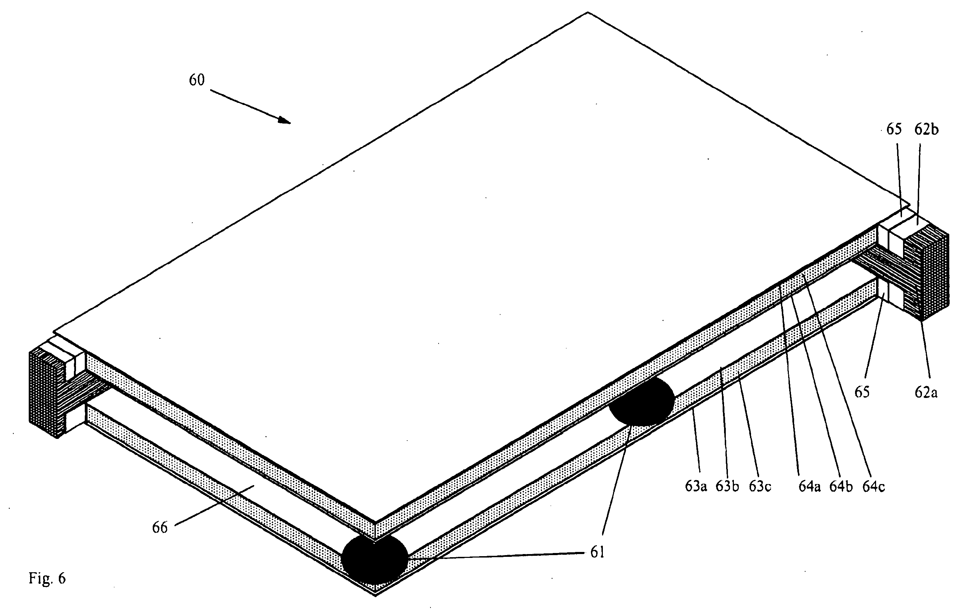

Dieser Wert ist für viele Anwendungen ausreichend. Durch die vorstehend beschriebene und nachstehend in Figur 6 auch bildlich dargestellte Massnahme des Abbiegens der inneren Platte der Grenzplatte am Rande des Vakuumspalt-Isolations-Elementes nach aussen, die eine Verlängerung des Wärmeleitpfades um bis zu einem Faktor 3 oder mehr, also von beispielsweise 5 mm auf beispielsweise 17 mm bringen kann, um eben diesen Faktor verbesserbar. Damit ergibt sich ein totaler Wärmefluss durch den Rand-Distanzhalter 20 von ca. 0.04 W/(Laufmeter,°K).

Dieser Wert ist bereits ausgezeichnet. Für besonders anspruchsvolle Anwendungen ist er aber nochmals verbesserungsfähig. Bei dem Rand-Distanzhalter 20 der Bauart 1 beträgt der Wärmefluss durch das schlauchartige Hüll-Material 21 ca. 75% des gesamten Wärmeflusses. Dieses Hüll-Material 21 kann in wärmetechnischer Sicht noch deutlich verbessert werden. Die geschilderten Glasflechtschläuche sind mit sogenannten e-Glas Filamenten aufgebaut. Kommen statt dieser Filamente s-Glas Filamente zum Einsatz, welche eine ca. doppelte Zugfestigkeit aufweisen, kann die Wandstärke des schlauchartigen Bauteils 21 und damit die Wärmeleitung durch dasselbe entsprechend reduziert sein. Zusätzlich ist es mit textilen Herstellungsmethoden möglich sogenannte unidirektionale Gebilde herzustellen. Dies bedeutet für die schlauchartigen Bauteile 21, dass der Grossteil der Filamente - also beispielsweise 80% derselben - in Längsrichtung des Rand-Distanzhalters 20 verläuft und nur ein kleiner Prozentsatz in der von Grenzplatte 24a zu Grenzplatte 24b zeigenden Querrichtung. Damit ist der Wärmetransport durch das schlauchartige Bauteil 21 nochmals mindestens auf ein Drittel absenkbar. Durch Kombination der genannten Massnahmen besteht das Potential den Wärmefluss durch den Rand-Distanzhalter 20 auf ca. 0.01W/(Laufmeter,°K) abzusenken.

Eine weitere Verbesserung im Sinne der Wärmeleitung ist möglich, indem für das gasdichte Band 23 statt beispielsweise eines 0.01 mm dicken Stahlbandes ein beispielsweise 0.1 mm dickes Teflon- oder Kaptonband verwendet ist, das beispielsweise mit Glas- und/oder Edelstahlschichten von total 0.001 mm Dicke gasdicht beschichtet ist. Der Wärmefluss durch den gesamten Rand-Distanzhalter 20 reduziert sich dann auf ca. 0.005 W/(Laufmeter,°K).

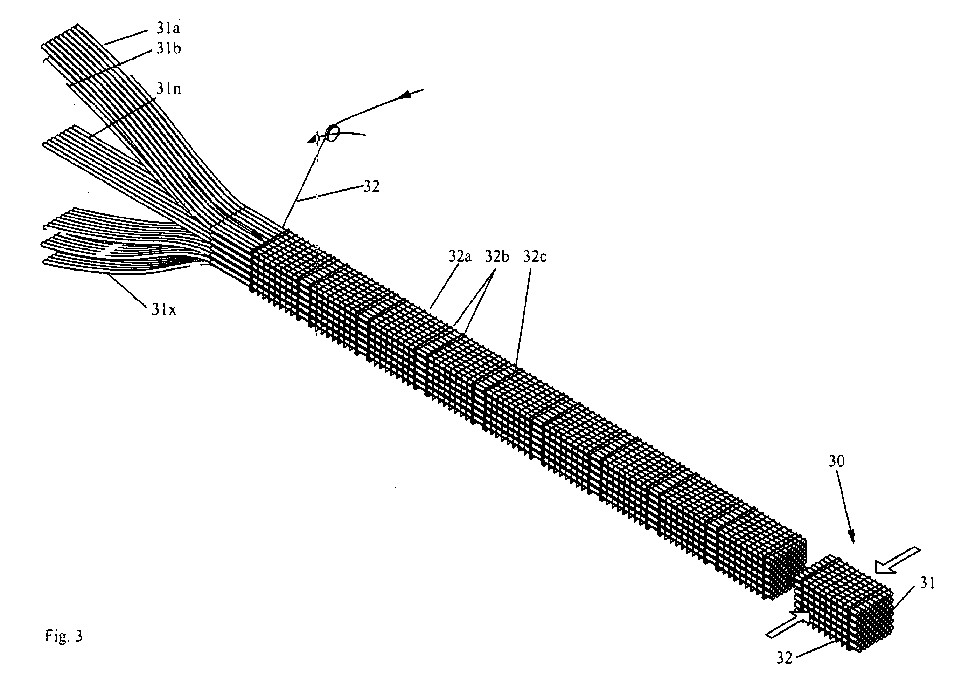

**Figur 3** zeigt die nicht massstäbliche perspektivische Prinzip-Skizze des Aufbaus und einer Herstellmöglichkeit eines Distanzhalters nach Bauart 2.

Der Distanzhalter 30 nach Bauart 2 besteht aus einem Filament-Bündel 31 von wohl definierter Länge aus im Wesentlichen parallel verlaufenden Filamenten, deren Durchmesser in Figur 1 um ein Vielfaches zu gross dargestellt sind. Das Filament-Bündel 31 wird von einem im Wesentlichen schraubenlinienartigverlaufenden draht- oder fadenartigen Hüll-Material 32 zusammen gehalten.

Die Richtung des Druckes der später von den beiden Grenzplatten eines Vakuumspalt-Isolationselementes auf einen Distanzhalter 30 der Bauart 2 ausgeübt wird, verläuft immer quer zur Längsrichtung der Filamente. Dabei ist es gleichgültig, ob der Druck relativ zum Distanzhalter 30, wie in Figur 3 mit den beiden Pfeilen angedeutet, in horizontaler Richtung oder in vertikaler Richtung angelegt ist. Das eine Mal bestimmt die Breite des Distanzhalters 30 den Abstand zwischen den Grenzplatten, das andere Mal dessen Höhe.

Die Filamente des Filament-Bündels 31 weisen vorzugsweise mindestens einige der folgenden Eigenschaften auf:
- Sie halten bis zu einer Stunde Temperaturen von knapp über 500°C sowie Drücken von bis zu 50 N/mm² auf das Gesamtbündel stand,
- Sie fliessen bei über Jahre anhaltenden gleich hohen Drücken, bei Temperaturen bis zu mindestens 50°C, nur wenig. Dies kann bedeuten, dass die Distanzhalter durch Dehnung der Umhüllung höchstens so weit flachgedrückt werden dürfen, dass ihre Ausdehnung senkrecht zur Plattenebene auch nach der Dehnung der Umhüllung mindestens 2 mm beträgt. Dies kann bei einer Ausgangsdicke von mindestens 3 mm mit den hier beschriebenen Materialien ohne Weiteres erreichbar sein.
- Sie gasen im Vakuum bei Unterdrücken von 10⁻⁴ mbar im Wesentlichen nicht aus.
- Die Wärmeleitfähigkeit des Faserbündels quer zur Faserlängsrichtung beträgt unter Vakuum von 10⁻³ mbar und tiefer höchstens 0.005 W/mK.

Die Auswahl an zu Filamenten formbaren Materialen, die derartigen Anforderungen genügen, ist beschränkt. Die Verwendung von Edelstahlfilamenten ist möglich, des hohen Preises und der relativ hohen Wärmeleitfähigkeit wegen aber nicht erste Wahl. Vorzuziehen sind die preiswert zur Verfügung stehenden Glas- oder Basaltfilamente, die eine niedrige Wärmeleitfähigkeit (1.25 bis 1.5 W/mK) besitzen und bei Temperaturen über 500°C noch hohe Druckfestigkeiten aufweisen. Bei den Glasfilamenten sind die sehr preiswerten e-Glas Filamente den wesentlich teureren s-Glas Filamenten vorzuziehen, weil die Druck- und Temperaturfestigkeit der beiden Glasarten sehr ähnlich ist.

Die Anforderungen an das draht-, filament- oder fadenartige Hüll-Material 32 sind ähnlich hoch. Sie müssen bei bis zu einer Stunde anhaltenden Temperaturen von knapp über 500°C den durch Drücke von bis zu 50 N/mm² auf das Gesamtbündel auf sie wirkenden Zugkräfte standhalten und dürfen bei über Jahre anhaltenden gleich hohen Drücken, bei Temperaturen bis zu mindestens 50°C, nur wenig fliessen. Sie dürfen im Vakuum bei Unterdrücken von 10⁻⁴ mbar nicht ausgasen. Die Wärmeleitfähigkeit der Summe der Windungen darf unter Vakuum von 10⁻³ mbar und tiefer höchstens 0.005 W/mK betragen.

Die Auswahl an Materialen, die derartigen Anforderungen genügen ist beschränkt. Als metallische Drähte kommen weiche Edelstahldrähte mit einem Durchmesser von kleiner als 0.1 mm, besser kleiner als 0.05 mm in Frage. Möglich sind auch preiswert zur Verfügung stehende Glas- oder Basaltfilamente oder gesponnene Fäden aus diesen Materialien. Bei den Glasfilamenten sind die zugfesteren s-Glas Filamente und demzufolge entsprechend kleineren Querschnitte und daraus resultierenden kleineren Wärmeleitung den e-Glas Filamenten vorzuziehen, sofern der Preis der Filamente dies erlaubt.

Bei einem beispielhaften Aufbau des in Figur 3 dargestellten Distanzhalters 30 mit e-Glas Filamenten im Filament-Bündel 31 und einer schraubenlinienartigen Umwicklung 32 mit Edel stahl draht des Durchmessers 0.04 mm und Windungsabstand 1.25 mm, mit einer beispielhaften Breite von 5 mm und einer beispielhaften Länge von 10 mm und bei der Anordnung von Distanzhaltern 30 zwischen den Grenzplatten eines Vakuumspalt-Isolations-Elementes in beispielsweise 150 mm Abstand voneinander, ergibt sich eine Druckbelastung von 0.1x150²/50 = 45 N/mm² auf die Gesamtfläche des Distanzhalters 30. Diese Druckbelastung liegt ein Vielfaches unterhalb der in Datenblättern mit 3000 N/mm² angegebenen maximal zulässigen Druckbelastung in Querrichtung von e-Glas oder s-Glas Filamenten, so dass auch trotz der Tatsache einer durch Punkt- oder Linienbelastung zwischen den einzelnen quasi-parallelen Fasern deutlich erhöhten lokalen Druck-Belastung keine grössere Deformationen der Fasern und damit auch keine signifikante Veränderung der Wärmeleitung in Querrichtung zu den Fasern auftritt. Mit den oben beispielhaft angenommenen Materialien, Abmessungen und Abständen der Distanzhalter 30 ergibt sich bei einer Distanzhalterhöhe von 5 mm ein Wärmefluss von lediglich 0.005 W/m²K durch die Summe der Distanzhalter 30.

Aus Figur 3 ist links zusätzlich eine mögliche Herstellmethode der Distanzhalter 30 nach Bauart 2 ersichtlich. Die Darstellung auch des Verfahrens in Figur 3 erfolgt aus Gründen der Übersichtlichkeit. Es ist jedoch sowohl möglich, die in Figur 3 gezeichneten Eigenschaften von Distanzhaltern in Distanzhaltern zu realisieren, die in einem anderen Verfahren hergestellt sind, als auch das Verfahren gemäss Figur 3 (links) für Distanzhalter mit anderen Eigenschaften (z.B. betreffend die Verteilung der Drahtwindungen und/oder Anzahl, Verteilung und/oder Anzahlverteilung von Fasern etc.) zu verwenden als in Figur 3 (insbesondere rechts) dargestellt.

Für das Verfahren wird bspw. eine Vielzahl, also beispielsweise 10 bis 50 von in Figur 3 nicht dargestellten Spulen verwendet, auf denen jeweils eine grosse Länge (mehrere Kilometer) eines aus einem der oben diskutierten Materialien gefertigten Filament-Rovings 31a bis 31x aufgespult sind. Beispielsweise handelt es sich jeweils um ein handelsübliches e-Glas Filament-Roving mit einer Breite von ca. 5 mm, einer Dicke im mit Querdruck belastetem Zustand von ca. 0.25 mm und einem textilen Gewicht von 2400 tex bestehend aus ca. 15'000 einzelnen Glasfilamenten des Durchmessers 9 µm. Diese Filament-Rovings 31a bis 31 x sind in einem kontinuierlichen Prozess so zusammengeführt, dass sie in der Richtung der Dicke des Filament-Bündels 31 auf einander gestapelt sind. Für die Erzeugung eines unter Druck ca. 5 mm Faser-Bündels 31 sind auf diese Art beispielsweise x=20 der beschriebenen e-Glas-Rovings zusammengeführt.

Das so entstandene Filament-Bündel 31 ist in einem kontinuierlichen Prozess im Wesentlichen schraubenlinienartig mit einem draht-, filament- oder fadenartigen Hüll-Material 32 aus einem der oben diskutierten Materialen umwunden. Beispielsweise handelt es sich um einen Edelstahldraht mit Durchmesser 0.04 mm. Der in dem kontinuierlichen Umwindungs-Prozess erzeugte Windungsabstand variiert beispielsweise so, dass in definierten, der Länge eines Distanzhalters 30 entsprechenden Abständen zwei End-Umwindungszonen 32b mit sehr kleinem, also beispielsweise mit 0.1 mm Windungsabstand durch eine Trennzone 32c mit relativ grossen, beispielsweise 2 bis 5 mm betragenden Windungsabstand getrennt sind. Der Windungsabstand der Tragezone 32a zwischen zwei End-Umwindungszonen 32b eines Distanzhalters 30 ist mit beispielsweise 0.5 bis 1.5 mm so gewählt, dass die Summe der Windungen den durch den Druck auf den Distanzhalter 30 entstehenden Zugkräften standzuhalten vermag.

Innerhalb der Trennzone 32c wird das entstandene, kontinuierlich umwundene Filament-Bündel in einzelne Distanzhalter 30 zertrennt, wobei dies natürlich auch nur bei jeder zweiten, dritten oder n-ten Trennzone 32c geschehen kann. Ist zum Zwecke der Umwindung beispielsweise ein weicher Stahldraht verwendet, muss dieser im Bereich der End-Umwindungszone32b vor dem Trennen nicht speziell fixiert sein. Ist aber ein sehr elastisches Hüll-Material, also beispielsweise ein Glas- oder Basaltfilament oder ein biegeschlaffes Hüll-Material, also beispielsweise ein Glas- oder Basaltfaden verwendet, ist dieses im Bereich der End-Umwindungszone 32b jeweils mit einem nicht ausgasenden Stoff fixiert. Dieser Stoff kann beispielsweise in Form eines flüssigen Glastropfens oder eines rasch härtenden beispielsweise anorganischen Klebstoffes so aufgebracht sein, dass die Fixierung auf dem Distanzhalter 30 so liegt, dass sie später in einem Vakuumspalt-Isolations-Element eine der beiden Grenzplatten berührt und so nicht zur Wärmeübertragung beiträgt.

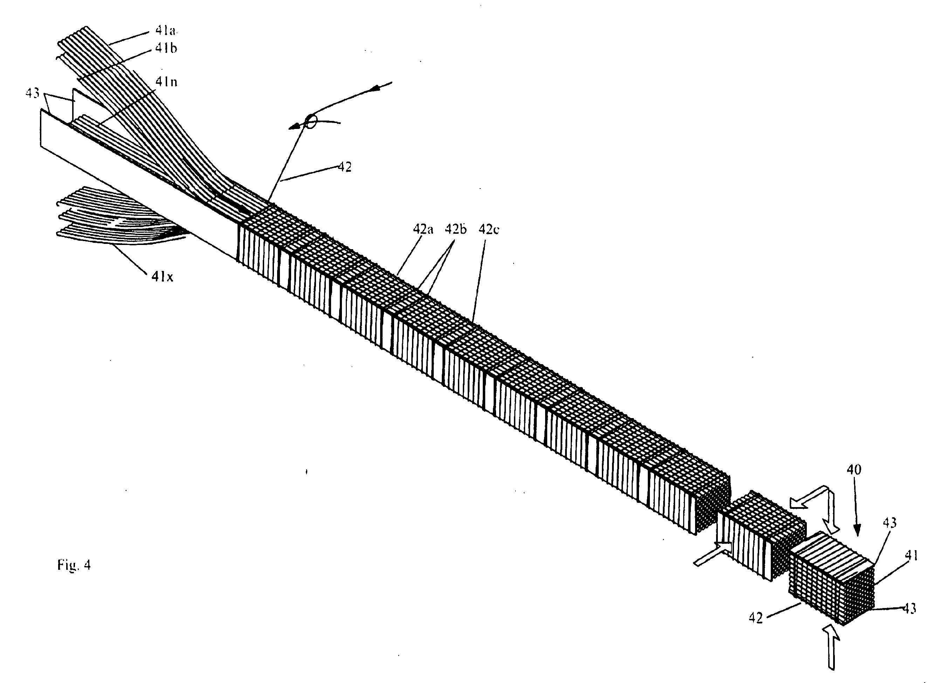

**Figur 4** zeigt die nicht massstäbliche perspektivische Prinzip-Skizze des Aufbaus und einer Herstellmöglichkeit eines alternativen Distanzhalters nach Bauart 2b.

Der einzige Unterschied des in Figur 4 skizzierten Distanzhalters 40 nach Bauart 2b zu dem in Figur 3 dargestellten ausführlich besprochenen Distanzhalter 30 der Bauart 2 besteht darin, dass in dem dargestellten beispielhaften kontinuierlichen Herstellungs-Prozess vor dem Umwinden des Filament-Bündels 41 mit dem draht-, filament- oder fadenartigen Hüll-Material 42 auf gegenüberliegenden Seiten des Filament-Bündels 41 zwei Verstärkungsbänder 43 kontinuierlich zugeführt und zusammen mit dem Filament-Bündel 41 umwunden sind.

Da alle Beschreibungen bezüglich der Figur 3 - inklusive der dort besprochenen geringen Wärmeleitung - sinngemäss auf Figur 4 zutreffen, werden hier nur Funktion und Art der zusätzlichen beiden Verstärkungsbänder 43 beschrieben (Die mit den Bezugszeichen 40, 41, 42, 41 a-x, 42a-c bezeichneten Elemente entsprechen den Elementen 30, 31, 32, 31a-x, 32a-c aus Figur 3.

Die Funktion der beiden Verstärkungsbänder 43 besteht darin, dem Distanzhalter 40 eine gegenüber dem Distanzhalter 30 genauer definierte geometrische Form zu geben. Die Verstärkungsbänder 43 besitzen dieselbe Höhe wie die Summe der zugeführten Filament-Rovings 41 a bis 41 x, also gemäss dem zu Figur 3 besprochenen Beispiel die Höhe 5 mm. Dadurch ist nach der Umwindung ein nahezu exakter rechtwinkliger Querschnitt des Distanzhalters 40 gegeben. Zusätzlich definieren die Verstärkungsbänder 43 nahezu perfekt ebene Grenzflächen, welche gleichmässig auf den Grenzplatten eines Vakuumspalt-Isolations-Elementes aufliegen und so für eine gleichmässige Druckverteilung innerhalb des Distanzhalters 40 nach Bauart 2b sorgen.

Wenn die Filament-Rovings 41 a bis 41 x, wie in Figur 4 gezeigt von unten nach oben gestapelt sind, sind die beiden Verstärkungsbänder 43 von den Seiten zugeführt, damit sich die Zuführung der unterschiedlichen Bauteile nicht gegenseitig stört. Infolge dessen zeigt auch die Richtung in welcher der Distanzhalter 40 mit Druck belastbar ist, wie mit den beiden horizontalen Pfeilen skizziert in horizontaler Richtung. Natürlich kann anschliessend der abgetrennte Distanzhalter 40 so gedreht sein, dass seine Belastungsrichtung in der Verbindungsrichtung der zwei Grenzplatten eines Vakuumspalt-Isolations-Elementes, also beispielsweise in vertikaler Richtung zeigt.

Damit die beiden Verstärkungsbänder 43 die geschilderte Funktion übernehmen, müssen sie eine genügende Eigensteifigkeit aufweisen. Ausserdem müssen sie wie alle anderen Bauteile des Distanzhalters 40 unter Belastung während ca. 1 Stunde Temperaturen von mindestens 300°C, besser aber über 500°C standhalten und dürfen im Vakuum von 10⁻⁴ mbar nicht ausgasen. Vorzugsweise sind sie zusätzlich so ausgebildet, dass sie dem geschilderten kontinuierlichen Herstellungs-Prozess ab Rolle zuführbar sind, wobei sie nach dem Abrollen keine gekrümmte Form mehr aufweisen. Da die Verstärkungsbänder 43 jeweils im direkten Kontakt zu einer der beiden Grenzplatten eines Vakuumspalt-Isolations-Elementes zum Einsatz kommen, tragen sie nicht zur Wärmeleitung von Grenzplatte zu Grenzplatte bei, womit die Grösse ihrer Wärmeleitfähigkeit unerheblich ist.

Diese geforderten Eigenschaften können prinzipiell von allen zu Bändern geeigneter Breite verarbeiteten Metallen erfüllt sein, deren Elastizitätsbereich bei einem allfälligen Rollen nicht überschritten ist. Versuche haben gezeigt, dass entsprechende Stahlbänder auch des niedrigen Ausgasens wegen hervorragend geeignet sind. Damit diese eine einerseits genügende Eigensteifigkeit und andererseits eine genügend gute Zertrennbarkeit aufweisen, hat sich als vorzuziehende Dicke derartiger Stahlbänder 0.1 mm bis 0.2 mm erwiesen.

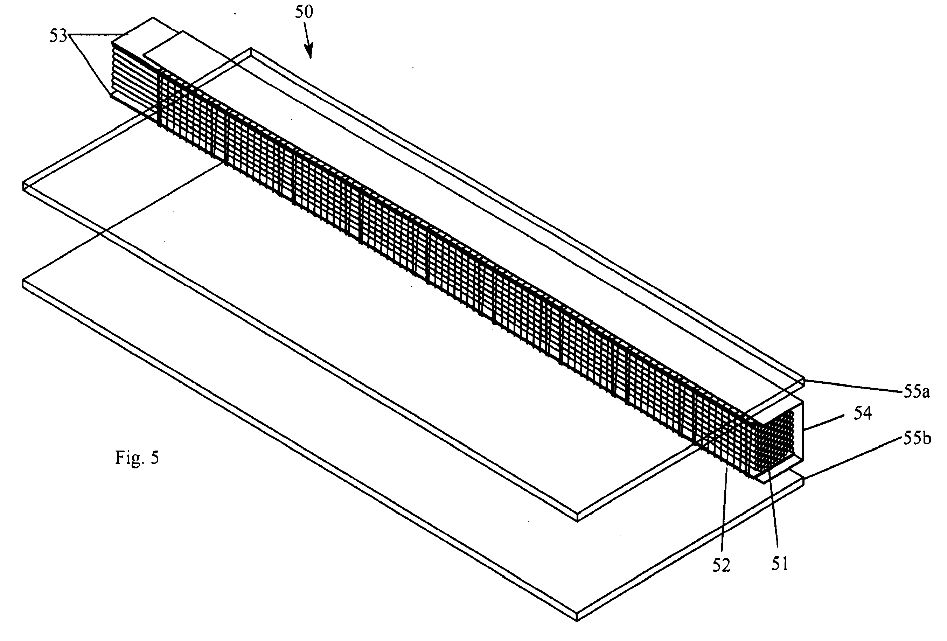

**Figur 5** zeigt die nicht massstäbliche perspektivische Prinzip-Skizze des Aufbaus und einer Herstellmöglichkeit eines langgestreckten, allenfalls beliebig gekrümmten Rand-Distanzhalters nach Bauart 2.

Der in Figur 5 skizzierte Rand-Distanzhalter 50 nach Bauart 2 ist in seinem Innern exakt gleich aufgebaut wie ein Distanzhalter 30 oder 40 nach Bauart 2 oder 2b, wobei er vorzugsweise die beiden Verstärkungsbänder 53 eines Distanzhalters 40 nach Bauart 2b besitzt. Ein Filament-Bündel 51 ist, zusammen mit allfällig vorhandenen Verstärkungsbändern 53 mit einem draht-, filament- oder fadenartigen Hüll-Material 52 umwunden. Die verwendeten Materialien entsprechen den bezüglich Figur 3 bzw. Figur 4 geschilderten. Dieser innere Aufbau besitzt unter Vakuum die bezüglich Figur 3 geschilderte geringe Wärmeleitfähigkeit und ist in der Lage die durch den Luftdruck hervorgerufenen, im Falle des Rand-Distanzhalters von drei Seiten wirkenden Druckkräfte zu übernehmen.

Zur Erzeugung der notwendigen hohen Gasdichtigkeit ist dieser innere Aufbau dreiseitig mit einem gasdichten, geformten Band 54 umgeben, wobei der obere und untere Schenkel dieses Bandes 53 später so mit je einer der Grenzplatten eines Vakuumspalt-Isolations-Elementes gasdicht verbunden ist, dass die nicht von dem dreiseitigen Band 53 abgedichtete Seite zum Inneren des Vakuumspalt-Isolations-Elementes hin ausgerichtet, womit der innere Aufbau beim Abpumpen ebenfalls evakuierbar ist.

Das gasdichte dreiseitig geformte Band 54, trägt massgeblich zum Wärmetransport von Grenzplatte 55a zu Grenzplatte 55b bei. Aus diesem Grunde sowie der notwendigen Faltbarkeit, der grossen erforderlichen Gasdichtigkeit und der gewünschten Temperaturbeständigkeit bis über 500°C wegen, ist die Materialauswahl eingeschränkt. In Frage kommen in erster Linie dünne Edelstahlbänder (Wärmeleitfähigkeit 15 W/mK) mit einer Dicke von 0.005 oder 0.01 bis allerhöchsten 0.05 mm. Mit dünnen, d.h. beispielsweise bis total 1 µm dicken Metall- oder Glasschichten versehene Bänder aus thermisch stabilem Kunststoff wie beispielsweise PTFE (Teflon) oder PI (Kapton) welche Temperaturen bis knapp über 400°C standhalten, kommen deshalb ebenfalls in Frage.

Der in Figur 5 skizzierte Rand-Distanzhalter 50 ist beispielsweise mit e-Glas Filamenten im Filament-Bündel 51 und einer schraubenlinienartigen Umwicklung 52 mit Edelstahldraht des Durchmessers 0.04 mm und Windungsabstand 1.25 mm, mit einer beispielhaften Breite von 5 mm und einer beispielhaften Länge von 10 mm und einer Höhe von beispielsweise ebenfalls 5 mm hergestellt. Dazu besitzt er beispielsweise 0.2 mm dicke Edelstahlverstärkungsbänder 53. Das dreiseitig geformte, gasdichte Band 54 ist beispielsweise 0.01 mm dick und besteht aus Edelstahl. Unter diesen Randbedingungen ergibt sich im evakuierten Zustand ein Wärmefluss durch das Filament-Bündel 51,dieUmwindung 52 und das gasdichte Stahlband 54 von total ca. 0.03 W/(Laufmeter,°K).

Dieser Wert entspricht der angestrebten Zielsetzung. Er ist durch hier nicht näher besprochene konstruktive Massnahmen am Rande eines Vakuumspalt-Isolations-Elementes, die eine Verlängerung des Wärmeleitpfades um mehr als den Faktor 3, also von beispielsweise 5 mm auf beispielsweise 17 mm bringt, um eben diesen Faktor verbesserbar. Damit ergibt sich ein totaler Wärmefluss durch den Rand-Distanzhalter 50 von ca. 0.01 W/(Laufmeter,°K).

Dieser Wert entspricht in hohem Masse der angestrebten Zielsetzung, ist aber noch leicht verbesserungsfähig, indem für das gasdichte Band 54 statt beispielsweise eines 0.01 mm dicken Stahlbandes ein beispielsweise 0.1 mm dickes Teflon- oder Kaptonband verwendet ist, das beispielsweise mit Glas- und/oder Edelstahlschichten von total 0.001 mm Dicke gasdicht beschichtet ist. Der Wärmefluss durch den gesamten Rand-Distanzhalter 50 reduziert sich dann auf ca. 0.005 W/(Laufmeter,°K).

**Figur 6** zeigt die nicht massstäbliche perspektivische Prinzip-Skizze des Schnitts durch ein Vakuumspalt-Isolations-Element 60.

Die beiden gasdichten Grenzplatten 63, 64 sind beispielsweise als Verbundplatten aufgebaut. Jeweils ist eine äussere Stahlplatte 63a, 64a mit einer inneren Stahlplatte 63b, 64b verbunden. Die beiden Stahlplatten 63a, 63b bzw. 64a, 64b sind beispielsweise jeweils 0.1 bis 1 mm dick. Die inneren Stahlplatten 63b, 64b sind jeweils im Bereich ihres Randes beispielsweise L-förmig so weit gegen aussen gebogen, dass der äussere Schenkel des L's mit der jeweiligen äusseren Stahlplatte 63a, 64a beispielsweise mittels Verschweissen verbindbar ist. Die Verbindung im inneren Bereich der Verbundplatten 63, 64ist sichergestellt durch ein Zwischenmaterial 63c, 64c das gut auf den jeweiligen beiden Stahlplatten 63a, 63b bzw. 64a, 64b haftet. Beispielsweise ist hierzu ein geschäumter Kunststoff im Einsatz.

In Figur 6 sind die beiden Grenzplatten 63, 64 als parallele ebene Platten dargestellt. Es könnte sich aber auch um beliebig geformte, in der Regel, aber nicht zwingend, im Wesentlichen quasi-parallel verlaufende Elemente handeln. Insbesondere können die Grenzplatten 63, 64 auch als einseitig offene schachtelförmige Elemente ausgeführt sein, deren Grösse so gewählt ist, dass die beiden schachtelförmigen Elemente so ineinander schiebbar sind, dass zwischen den beiden ringsum ein, von den geschilderten Distanzhaltern 61 sichergestellter Spalt 66 definierter Grösse vorhanden ist. Der so vorhandene nach einer Seite offene Spalt 66 ist evakuiert und mit einem der geschilderten Rand-Distanzhalter 62 gasdicht verschlossen.

Im Vakuumspalt 66 zwischen den beiden Grenzplatten 63, 64 sind in regelmässigen Abständen Distanzhalter 61 angebracht. In Figur 6 sind Distanzhalter 61 nach der geschilderten Bauart 1 angedeutet, welche wie geschildert aus einem zweiseitig verengten, gasdurchlässigem, schlauchartigen Hüll-Material bestehen, das mit einem fliessfähigen, beispielsweise pulverartigen oder faserigen Füllmaterial gefüllt ist. Es könnte sich aber auch um Distanzhalter 61 gemäss der geschilderten Bauart 2 handeln. Der regelmässige Abstand zwischen den einzelnen Distanzhaltern beträgt beispielsweise zwischen 100 bis 200 mm.

Der Abstand der beiden Stahlplatten 63a, 63b bzw. 64a, 64b und damit die Dicke des Verbindungsmaterial 63c, 64c beträgt beispielsweise 5 bis 10 mm. Beträgt er beispielsweise 6 mm und sind die beiden Stahlplatten 63a, 63b bzw. 64a,64b jeweils 0.2 mm dick, so stellt sich unter Luftdruck bei einem regelmässigen Abstand der Distanzhalter 61 von beispielsweise 150 mm eine maximale Durchbiegung der beiden Grenzplatten 63, 64 von ca. 0.2 mm ein.

In ihrem Randbereich sind die beiden Grenzplatten 63, 64 mit einem Rand-Distanzhalter 62 gasdicht mit einander verbunden. In Figur 6 ist ein Rand-Distanzhalter 62 nach der geschilderten Bauart 2 angedeutet, welcher mit einem Filament-Bündel 62a von im Wesentlich in seiner Längsrichtung quasi-parallel verlaufenden Filamenten aufgebaut ist, das von einer, nicht dargestellten, im Wesentlichen schraubenlinienartigen Umwindung mit einem nicht ausgasenden, zug- und temperaturfesten draht-, filament- oder fadenartigen Hüll-Material zusammen gehalten ist. Zur Sicherstellung der Gasdichtigkeit ist dieses mit Hüll-Material umwundene Filament-Bündel 62a dreiseitig von einem gasdichten Bauteil 62b, also beispielsweise einem 10 µm dicken Stahlband, umgeben. Auf diese Weise ist ein Rand-Distanzhalter 62 vorhanden, welcher gegen aussen gasdicht und gegen innen gasdurchlässig ist.

Das gasdichte Bauteil 62b des Rand-Distanzhalters 62 ist mit einem geeigneten Verbindungsmaterial 65 gasdicht mit den beiden Grenzplatten 63, 64 verbunden. Das Verbindungsmaterial 65 ist beispielsweise ein, bei genügend hoher Temperatur, also mindestens oberhalb 300°C besser aber zwischen 500°C und 700°C schmelzendes Lot. Vorteilhafterweise ist das verwendete Lot des späteren Ausgasens wegen ohne Flussmittel einsetzbar. Beispielsweise kann es sich um das bei ca. 610°C schmelzende Silberhartlot "BrazeTec 4003" handeln. Das Verbindungsmaterial 65 kann beispielsweise aber auch ein hochtemperaturfester, also in der Regel anorganischer Klebstoff oder ein beliebiges anderes geeignetes Material sein.

## Patentansprüche

1. Vakuumspalt-Isolations-Element (60) mit zwei gasdichten Grenzplatten (14a, 14b, 24a, 24b, 55a, 55b, 63, 64) und einem Vakuumspalt (66) zwischen denselben und mit zwischen den Grenzplatten angeordneten Distanzhaltern (10, 20, 30, 40, 50, 61, 62) zur Aufrechterhaltung dieses Vakuumspaltes (66), welche Distanzhalter ein Material (12, 22, 31, 41, 51, 62a) besitzen, das gegen den vom Luftdruck durch Zusammendrücken der Grenzplatten erzeugten Innendruck des Materials (12, 22, 31, 41, 51, 62a) zusammengehalten ist, **dadurch gekennzeichnet, dass** das Material (12, 22, 31, 41, 51, 62a) eine Vielzahl von gegeneinander verschiebbaren Einzelelementen aufweist.

2. Vakuum-Isolations-Element nach Anspruch 1, wobei das Material (12, 22, 31, 41, 51, 62a) im Inneren der Distanzhalter als Füllmaterial vorhanden ist und von einer gasdurchlässigen Umhüllung (11, 21, 32, 42, 52) gegen den vom Luftdruck durch Zusammendrücken der Grenzplatten erzeugten Innendruck des Füllmaterials (12, 22, 31, 41, 51, 62a) zusammengehalten ist.

3. Vakuum-Isolations-Element nach Anspruch 2, wobei mindestens einer der Distanzhalter (10, 61) so ausgebildet ist, dass das Füllmaterial (12) fliessfähig, beispielsweise pulverartig oder faserig ist, und dass die Umhüllung von einem gasdurchlässigen, schlauchartigen, von zwei nahezu oder ganz geschlossenen Verengungen (13) begrenzten Hüll-Material (11) gebildet wird.

4. Vakuumspalt-Isolations-Element (60) nach Anspruch 2 oder 3, **dadurch gekennzeichnet, dass** die Umhüllung von mindestens einem der Distanzhalter durch ein gasdurchlässiges, schlauchartiges Hüll-Material (11, 21) gebildet ist, das mit textilen Methoden aus Filamenten aufgebaut ist, also beispielsweise mit Glas- oder Basalt-Rovings geflochten oder gewoben ist, wobei das Hüll-Material (11, 21) beispielsweise mit textilen Methoden aus langgestreckten Filamenten unidirektional aufgebaut ist, derart, dass die Filamente beim Distanzhalter (10, 61) zum überwiegendem Teil, beispielsweise mindestens 70% oder mindestens 80% in einer zur Grenzplatten-Ebene im wesentlichen parallelen Richtung verlaufen.

5. Vakuumspalt-Isolations-Element (60) nach einem der Ansprüche 2-4, **dadurch gekennzeichnet, dass** mindestens einer der Distanzhalter als Füllmaterial ein Filament-Bündel (31, 51, 62a) von im Wesentlich in seiner Längsrichtung im Wesentlichen parallel verlaufenden Filamenten aufweist, wobei als Umhüllung beispielsweise eine im Wesentlichen schraubenlinienartigen Umwindung mit draht-, filament- oder fadenartigen Hüll-Material (32, 52) dient.

6. Vakuumspalt-Isolations-Element (60) nach Anspruch 5, wobei der mindestens eine Distanzhalter mit dem Filament-Bündel als Füllmaterial mit zwei bandartigen Bauteilen (43, 53) verstärkt ist.

7. Vakuumspalt-Isolations-Element (60) nach einem der Ansprüche 5 oder 6, **dadurch gekennzeichnet, dass** das Filament-Bündel (31, 41, 51, 62a) aus einer Vielzahl, also beispielsweise aus 10 bis 50 auf einander gestapelter, 1 mm bis 10 mm, vorzugsweise 3 mm bis 6 mm breiter Glasfilament- oder Basaltfilament-Rovings zusammen gesetzt ist.

8. Vakuum-Isolations-Element (60) nach Anspruch 1, **dadurch gekennzeichnet, dass** die Einzelemente Filamente sind und das Material eine Mehrzahl von aufeinander geschichteten, aus den Filamenten gewobenen Bändern aufweist, wodurch das Material dadurch gegen den vom Luftdruck durch Zusammendrücken der Grenzplatten erzeugten Innendruck des Füllmaterials (12, 22, 31, 41, 51, 62a) zusammengehalten ist, dass die Einzelelemente innerhalb der Bänder miteinander verwoben sind.

9. Vakuumspalt-Isolations-Element (60) nach einem der vorangehenden Ansprüche, **dadurch gekennzeichnet, dass** mindestens einer der genannten Distanzhalter entlang eines Randes des Vakuum-Isolations-Elements verlaufende Rand-Distanzhalter (20, 50, 62) zur Aufrechterhaltung des Vakuumspalts (66) und zur Sicherstellung der Gasdichtigkeit am Rande des Vakuumspalt-Isolations-Elementes (60) ist.

10. Vakuumspalt-Isolations-Element (60) nach Anspruch 9, **dadurch gekennzeichnet, dass** der mindestens eine Rand-Distanzhalter von einem gasdichten bandartigen Bauteil (23, 54, 62b) gasdicht gemacht ist, welches dreiseitig so um das Material (22, 51 62a) herum formbar und mit den Grenzplatten (24a, 24b, 55a, 55b, 63, 64) des Vakuumspalt-Isolations-Elementes (60) gasdicht verbindbar ist, dass die offene Seite des dreiseitig geformten, gasdichten, bandartigen Bauteils (23, 54, 62b) zum Vakuumspalt (66) des Vakuumspalt-Isolations-Elementes (60) hinweist, so dass das Material (22, 51, 62a) beim Abpumpen des Vakuumspalt-Isolations-Elementes (60) mit evakuierbar ist.

11. Vakuumspalt-Isolations-Element (60) nach einem der vorangehenden Ansprüche, **dadurch gekennzeichnet, dass** mindestens einige der Distanzhalter Punkt-Distanzhalter sind, die zwischen den Grenzplatten in einem Inneren des Vakuumspalt-Isolations-Elements verteilt angeordnet sind.

12. Vakuumspalt-Isolations-Element (60) nach einem der vorangehenden Ansprüche, **dadurch gekennzeichnet, dass** das Material (12, 22, 62a) von mindestens einem der Distanzhalter aus der Gruppe der für Vakuum-Isolations-Panels (VIP) verwendeten, dort ganzflächig angewendeten und bis zu Temperaturen über 500°C stabilen Kernmaterialien stammt, also beispielsweise fumed silica, pyrogene Kieselsäure, Perlit, Zeolith und/oder Glas- oder Basaltfasern aufweist.

13. Vakuumspalt-Isolations-Element (60) nach einem der vorangehenden Ansprüche, **dadurch gekennzeichnet, dass** eine von den Distanzhaltern eingenommene Fläche höchstens 10% der von den Decklatten definierten Gesamtfläche beträgt.

14. Vakuumspalt-Isolations-Element (60) nach einem der vorangehenden Ansprüche, **dadurch gekennzeichnet, dass** der Zwischenraum zwischen den Grenzplatten bis auf die Distanzhalter und mögliche, sich flächig zwischen den Deckplatten erstreckende, strahlungsmindernde Elemente frei von festen oder flüssigen Objekten ist, welche beide Grenzplatten berühren.

15. Vakuumspalt-Isolations-Element (60) nach einem der vorangehenden Ansprüche, **dadurch gekennzeichnet, dass** die Grenzplatten als Grenzplatten-Verbund mit einer inneren (63b, 64b) und einer äusseren Platte (63a, 64a) aufgebaut sind, wobei die innere und die äussere Platte in einem zentralen Bereich einem Abstand zueinander angeordnet sind und die innere Platte in einem Randbereich zur äusseren Platte hin abgebogen ist, derart, dass im Randbereich der innere Abstand zwischen den beiden Grenzplatten grösser ist als im zentralen Bereich.

## Claims

1. A vacuum gap insulation element (60) with two gas-tight boundary plates (14a, 14b, 24a, 24b, 55a, 55b, 63, 64) and with a vacuum gap (66) between these boundary plates, and with spacers (10, 20, 30, 40, 50, 61, 62) which are arranged between the boundary plates and are for maintaining this vacuum gap (66), said spacers having a material (12, 22, 31, 41, 51, 62a) which is held together against the inner pressure of the material (12, 22, 31, 41, 51, 62a), said inner pressure being produced by the air pressure by way of pressing together the boundary plates, **characterised in that** the material (12, 22, 31, 41, 51, 62a) comprises a multitude of individual elements which can be displaced with respect to one another.

2. A vacuum gap insulation element according to claim 1, wherein the material (12, 22, 31, 41, 51, 62a) in the inside of the spacers is present as a filling material and is held together by a gas-permeable envelope (11, 21, 32, 42, 52), against the inner pressure of the filling material (12, 22, 31, 41, 51, 62a) which is produced by the air pressure by way of pressing together the boundary plates.

3. A vacuum gap insulation element according to claim 2, wherein at least one of the spacers (10, 61) is designed such that the filling material (12) is flowable, for example is powdery or fibrous, and that the envelope is formed by a gas-permeable, sack-like enveloping material (11) which is delimited by two almost or completely closed narrowings (13).

4. A vacuum gap insulation element (60) according to claim 2 or 3, **characterised in that** the envelope of at least one of the spacers is formed by a gas-permeable, sack-like enveloping material (11, 21) which is constructed from filaments by textile methods, thus for example is braided or woven, with glass rovings or basalt rovings, wherein the enveloping material (11, 21) is for example constructed in a unidirectional manner from elongate filaments by way of textile methods, in a manner such that the filaments with the regard to the spacer (10, 61), to a predominant part, for example at least 70% or at least 80%, run in a direction which is essentially parallel to the boundary plate plane.

5. A vacuum gap insulation element (60) according to one of the claims 2-4, **characterised in that** at least one of the spacers, as a filling material comprises a filament bundle (31, 51, 62a) of filaments running essentially parallel in essentially its longitudinal direction, wherein for example an essentially helix-like wrapping with wire-like, filament-like or thread-like enveloping material (32, 52) serves as an envelope.

6. A vacuum gap insulation element (60) according to claim 5, wherein the at least one spacer with the filament bundle as a filling material is reinforced with two strip-like components (43, 53).

7. A vacuum gap insulation element (60) according to one of the claims 5 or 6, **characterised in that** the filament bundle (31, 41, 51, 62a) is composed of a multitude, thus for example of 10 to 50 glass filament rovings or basalt filament rovings which are stacked upon one another and which are 1 to 10 mm, preferably 3 mm to 6 mm wide.

8. A vacuum gap insulation element (60) according to claim 1, **characterised in that** the individual elements are filaments, and the material comprises a plurality of strips which are layered upon one another and are woven from the filaments, by which means the material is held together against the inner pressure of the filling material (12, 22, 31, 41, 51, 62a) which is produced by air pressure by way of pressing together the boundary plates, by way of the individual elements being woven to one another within the strips.

9. A vacuum gap insulation element (60) according to one of the preceding claims, **characterised in that** at least one of the mentioned spacers is an edge spacer (20, 50, 62) which runs along an edge of the vacuum gap insulation element and is for maintaining the vacuum gap (66) and for ensuring the gas sealedness at the edge of the vacuum gap insulation element (60).

10. A vacuum gap insulation element (60) according to claim 9, **characterised in that** the at least one edge spacer is rendered gas-tight by a gas-tight, strip-like component (23, 54, 62b) which can be shaped around the material (22, 51, 62a) in a three-sided manner and connected in a gas-tight manner to the boundary plates (24a, 24b, 55a, 55b, 63, 64) of the vacuum gap insulation element (60), such that the open-side of the gas-tight, strip-like component (23, 54, 62b) shaped in a three-sided manner points to the vacuum gap (66) of the vacuum gap insulation element (60), so that the material (22, 51, 62a) can be evacuated on evacuating the vacuum gap insulation element (60).

11. A vacuum gap insulation element (60) according to one of the preceding claims, **characterised in that** at least some of the spacers are point-spacers which are arranged in a manner distributed between the boundary plates in an inside of the vacuum gap insulation element.

12. A vacuum gap insulation element (60) according to one of the preceding claims, **characterised in that** the material (12, 22, 62a) of at least one of the spacers originates from the group of core materials which are used for vacuum insulation panels (VIP), are applied there over the whole surface and are stable up to temperatures above 500°C, thus for example fumed silica, pyrogenic silicic acid, perlite, zeolite and/or gas fibres or basalt fibres.

13. A vacuum gap insulation element (60) according to one of the preceding claims, **characterised in that** a surface which is assumed by the spacers at the most is 10% of the total surfaced defined by the boundary plates.

14. A vacuum gap insulation element (60) according to one of the preceding claims, **characterised in that** the intermediate space between the boundary plates with the exception of the spacers and possible radiation-reducing elements which extend in an extensive manner between the boundary plates is free of solid or fluid objects which contact both boundary plates.

15. A vacuum gap insulation element (60) according to one of the preceding claims, **characterised in that** the boundary plates are constructed as a boundary plate composite with an inner (63b, 64b) and an outer plate (63a, 64a), wherein the inner and the outer plate are arranged in a central region at a distance to one another, and the inner plate in an edge region is bent towards the outer plate, in a manner such that the inner distance between the two boundary plates is larger in the edge region than in the central region.

## Revendications

1. Elément isolant (60) à interstice sous vide présentant
deux plaques frontières (14a, 14b, 24a, 24b, 55a, 55b, 63, 64) étanches aux gaz avec entre elles un interstice (66) sous vide et
des moyens d'écartement (10, 20, 30, 40, 50, 61, 62) disposés entre les plaques frontières en vue de maintenir cet interstice (66) sous vide,
les moyens d'écartement présentant un matériau (12, 22, 31, 41, 51, 62a) dont la cohésion est maintenue en opposition à la pression intérieure du matériau (12, 22, 31, 41, 51, 62a) causée par la pression d'air qui découle du fait que les plaques frontières sont repoussées l'une contre l'autre,
**caractérisé en ce que**
le matériau (12, 22, 31, 41, 51, 62a) présente plusieurs éléments distincts aptes à coulisser les uns par rapport aux autres.

2. Elément isolant à interstice sous vide selon la revendication 1, dans lequel le matériau (12, 22, 31, 41, 51, 62a) est prévu à l'intérieur des moyens d'écartement en tant que matériau de charge et en ce que sa cohésion est maintenue par une enveloppe (11, 21, 32, 42, 52) perméable aux gaz, en opposition à la pression intérieure du matériau (12, 22, 31, 41, 51, 62a) causée par la pression d'air qui découle du fait que les plaques frontières sont repoussées l'une contre l'autre.

3. Elément isolant à interstice sous vide selon la revendication 2, dans lequel au moins l'un des moyens d'écartement (10, 61) est configuré de telle sorte que le matériau de charge (12) soit apte à s'écouler et soit par exemple en forme de poudre ou de fibres, et que l'enveloppe soit formée par un matériau d'enveloppe (11) perméable aux gaz, en forme de manchon, délimitée par deux rétrécissements (13) presque fermés ou complètement fermés.

4. Elément isolant (60) à interstice sous vide selon les revendications 2 ou 3, **caractérisé en ce que** l'enveloppe d'au moins l'un des moyens d'écartement est formée en appliquant des méthodes textiles à un matériau d'enveloppe (11, 21) perméable aux gaz, en forme de manchon, constitué de filaments, et donc par exemple par un matériau tressé ou tissé à partir de rovings de verre ou de basalte, le matériau d'enveloppe (11, 21) étant par exemple formé unidirectionnellement en appliquant des méthodes textiles sur des filaments allongés, de telle sorte que sur le moyen d'écartement (10, 61), la partie prédominante, par exemple au moins 70 % ou au moins 80 %, des filaments s'étende dans une direction essentiellement parallèle au plan des plaques frontières.

5. Elément isolant (60) à interstice sous vide selon l'une des revendications 2 à 4, **caractérisé en ce qu'**au moins l'un des moyens d'écartement présente comme matériau de charge un faisceau (31, 51, 62a) de filaments s'étendant essentiellement en parallèle essentiellement dans le sens de sa longueur, l'enveloppe étant formée par exemple par un enroulement essentiellement en hélice d'un matériau d'enveloppe (32, 52) en forme de fils, de filaments ou de fibres.

6. Elément isolant (60) à interstice sous vide selon la revendication 5, dans lequel le ou les moyens d'écartement dans lesquels le faisceau de filaments sert de matériau de charge sont renforcés par deux composants (43, 53) en forme de ruban.

7. Elément isolant (60) à interstice sous vide selon l'une des revendications 5 ou 6, **caractérisé en ce que** le faisceau (31, 41, 51, 62a) de filaments est constitué de plusieurs rovings de filaments de verre ou de filaments de basalte, par exemple de 10 à 50 de ces rovings, empilées les unes au-dessus des autres et présentant une largeur de 1 mm à 10 mm et de préférence de 3 mm à 6 mm.

8. Elément isolant (60) à interstice sous vide selon la revendication 1, **caractérisé en ce que** les éléments distincts sont des filaments et **en ce que** le matériau présente plusieurs rubans tissés à partir des filaments et empilés les uns sur les autres, la cohésion du matériau en opposition à la pression intérieure du matériau (12, 22, 31, 41, 51, 62a) causée par la pression d'air qui découle du fait que les plaques frontières sont repoussées l'une contre l'autre étant maintenue en tissant les éléments distincts les uns avec les autres à l'intérieur des rubans.

9. Elément isolant (60) à interstice sous vide selon l'une des revendications précédentes, **caractérisé en ce qu'**au moins l'un des moyens d'écartement est un moyen d'écartement (20, 50, 62) de bord qui s'étend le long d'un bord de l'élément d'isolation sous vide pour maintenir l'interstice (66) sous vide et pour garantir l'étanchéité aux gaz sur le bord de l'élément d'isolation (60) à interstice sous vide.

10. Elément isolant (60) à interstice sous vide selon la revendication 9, **caractérisé en ce que** le ou les moyens d'écartement de bord sont rendus étanches aux gaz par un composant (23, 54, 62b) du type en ruban, étanche aux gaz, qui peut être façonné autour du matériau (22, 51, 62a) sur trois côtés et peut être relié de manière étanche aux gaz aux plaques frontières (24a, 24b, 55a, 55b, 63, 64) de l'élément d'isolation (60) à interstice sous vide, **en ce que** le côté ouvert du composant en ruban (23, 54, 62b) étanche aux gaz et formé sur trois côtés est orienté vers l'interstice (66) sous vide de l'élément d'isolation (60) à interstice sous vide de telle sorte que lors de la mise sous vide de l'élément (60) d'isolation à interstice sous vide, le matériau (22, 51, 62a) puisse être mis sous vide.

11. Elément isolant (60) à interstice sous vide selon l'une des revendications précédentes, **caractérisé en ce qu'**au moins certains des moyens d'écartement sont des moyens d'écartement ponctuels répartis entre les plaques frontières à l'intérieur de l'élément d'isolation à interstice sous vide.

12. Elément isolant (60) à interstice sous vide selon l'une des revendications précédentes, **caractérisé en ce que** le matériau (12, 22, 62a) d'au moins l'un des moyens d'écartement provient de la groupe des matériaux d'âme utilisés sur la totalité de la surface de panneaux d'isolation sous vide (VIP) et stables jusqu'à des températures dépassant 500°C, et donc présente par exemple de la silice fumée, de l'acide silicique pyrogène, de la perlite, de la zéolithe et/ou des fibres de verre ou de basalte.

13. Elément isolant (60) à interstice sous vide selon l'une des revendications précédentes, **caractérisé en ce que** la surface occupée par les moyens d'écartement représente au plus 10 % de la surface totale définie par les plaques de recouvrement.

14. Elément isolant (60) à interstice sous vide selon l'une des revendications précédentes, **caractérisé en ce qu'**à l'exception des moyens d'écartement et des éventuels éléments de réduction du rayonnement qui s'étendent à plat entre les plaques de recouvrement, l'espace intermédiaire entre les plaques frontières est exempt d'objets solides ou liquides en contact avec les deux plaques frontières.

15. Elément isolant (60) à interstice sous vide selon l'une des revendications précédentes, **caractérisé en ce que** les plaques frontières sont configurées en plaques frontières composites dotées d'une plaque intérieure (63b, 64b) et d'une plaque extérieure (63a, 64a), la plaque intérieure et la plaque extérieure étant disposées à distance l'une de l'autre dans une partie centrale et la plaque intérieure étant cintrée en direction de la plaque extérieure dans une bordure, de telle sorte que dans la bordure, la distance intérieure entre les deux plaques frontières soit supérieure à leur distance dans la partie centrale.
